(19)

Europäisches Patentamt
European Patent Office
Office européen des brevets

(11)  **EP 4 390 668 B1**

(12)  **EUROPEAN PATENT SPECIFICATION**

(45) Date of publication and mention
of the grant of the patent:
**15.10.2025  Bulletin 2025/42**

(21) Application number: **23818817.1**

(22) Date of filing: **13.04.2023**

(51) International Patent Classification (IPC):
*G06F 3/048* [(2013.01)]    *G06F 8/38* [(2018.01)]
*G06F 3/0484* [(2022.01)]    *G06F 3/04886* [(2022.01)]

(52) Cooperative Patent Classification (CPC):
**G06F 3/0488; G06F 3/0484; G06F 3/04842;**
**G06F 3/04847; G06F 3/04883; G06F 3/04886**

(86) International application number:
**PCT/CN2023/088067**

(87) International publication number:
**WO 2023/236649 (14.12.2023 Gazette 2023/50)**

(54)  **METHOD FOR DISPLAYING SWITCH CONTROL, AND ELECTRONIC DEVICE**

VERFAHREN ZUR ANZEIGE EINER SCHALTERSTEUERUNG UND ELEKTRONISCHE
VORRICHTUNG

PROCÉDÉ D'AFFICHAGE DE COMMANDE DE COMMUTATEUR ET DISPOSITIF ÉLECTRONIQUE

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **10.06.2022  CN 202210652634**

(43) Date of publication of application:
**26.06.2024  Bulletin 2024/26**

(73) Proprietor: **Honor Device Co., Ltd.**
**Shenzhen, Guangdong 518040 (CN)**

(72) Inventor: **HUANG, Jinzong**
**Shenzhen, Guangdong 518040 (CN)**

(74) Representative: **Beder, Jens et al**
**Mitscherlich PartmbB**
**Patent- und Rechtsanwälte**
**Karlstraße 7**
**80333 München (DE)**

(56) References cited:
**CN-A- 107 566 613    CN-A- 109 254 772**
**CN-A- 111 714 874    CN-A- 112 732 258**
**US-B2- 10 425 575**

- **ANONYMOUS JUAN KATIA: "Creating day-night**
  **CSS only toggle switch", 29 December 2020**
  **(2020-12-29), pages 1 - 17, XP093231086,**
  **Retrieved from the Internet <URL:https://web.**
  **archive.org/web/20201229045032/https://**
  **daily-dev-tips.com/posts/**
  **creating-day-night-css-only-toggle-switch/>**
  **[retrieved on 20241204]**
- **LONGNIAN: "How to enable image text**
  **recognition function in JD.com app",**
  **XIAZAIBA.COM, XP009551149, Retrieved from**
  **the Internet <URL:https://www.xiazaiba.com/**
  **jiaocheng/56631.html>**

## Description

This application claims priority to Chinese Patent Application No. 202210652634.X, filed with China National Intellectual Property Administration on June 10, 2022 and entitled "SWITCH CONTROL DISPLAY METHOD AND ELECTRONIC DEVICE".

## TECHNICAL FIELD

This application relates to the field of smart terminal technologies, and in particular, to a switch control display method, an electronic device and a computer-readable storage medium.

## BACKGROUND

A switch is often translated as a sliding switch, a toggle switch, and the like. A switch control, as a directly operable control in a terminal interface, provides a user with two mutually exclusive options (such as on/off, yes/no, enabled/disabled) to select from.

The most important function of a switch control is to immediately turn on or off a function and clearly show a switch state to the user. Therefore, how add visual effects that attract a user on a switch control is particularly important.

The US 10 425 575 B2 discloses an information processing device, a program, and an information processing method, capable of instructing an imaging device to start and end a predetermined operation through an operation via a GUI. The information processing device includes: a display control unit configured to control display of a slider on a display unit, the slider being configured such that a display object is movable between predetermined positions; and a process control unit configured to instruct an imaging unit to control photography in a predetermined mode when the process control unit receives an operation of moving the display object.

The internet publication with the title of with the title of "Creating day-night CSS only toggle switch", published on 29 December 2020 at "https://daily-dev-tips.com/posts/creating-day-night-css-only-toggle-switch/", and written by De Juan Katia, discusses on the webpage checkbox techniques with switch effects,.

## SUMMARY

To resolve the foregoing technical problem, embodiments of this application provide a switch control display method, an electronic device and a computer-readable storage medium according to the enclosed independent claims. Advantageous features of the present invention are defined in the corresponding subclaims. In this method, a visual effect that attracts a user is added to a switch control, so that user experience in the use of the switch control can be improved. In the following, parts of the description and drawings referring to embodiments, which are not covered by the claims, are not presented as embodiments of the invention but as examples useful for understanding the invention.

According to a first aspect, an embodiment of this application provides a switch control display method. A switch control includes a track and a first icon. The first icon slides in the track, and a second icon is displayed on the first icon. When the first icon is located at a first position in the track, the switch control is in an ON state or an OFF state, and a shape of the second icon is a first shape. When the first icon is located at a second position in the track, the switch control is in the OFF state or the ON state, and the shape of the second icon is a second shape. The switch control display method is applied to an electronic device, including: In a process that the first icon slides in the track, the shape of the second icon changes linearly with a sliding offset of the first icon.

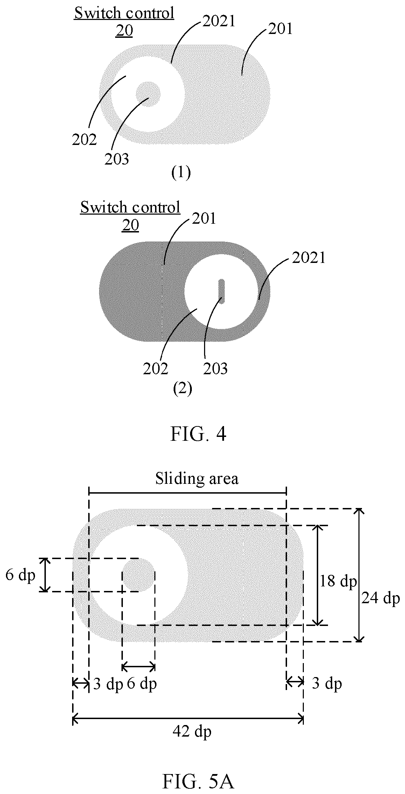

For example, the track may be a background track 201 shown in FIG. 4, the first icon may be a circular button 202 shown in FIG. 4, and the second icon may be an IO symbol shown in FIG. 4.

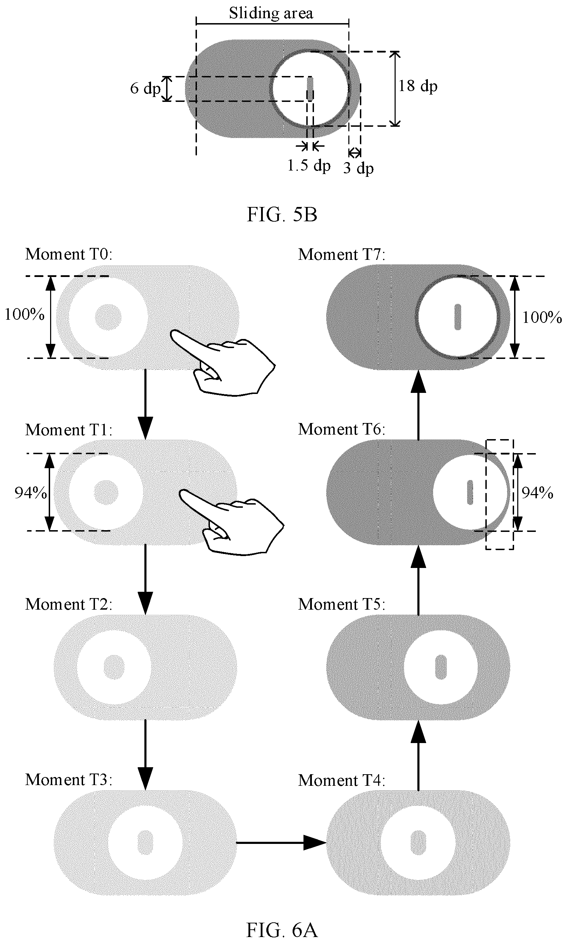

For example, the first position and the second position may be two ends of a sliding area in the track. For example, refer to FIG. 6A. The first position is a position where the circular button is located at a moment T0, and the second position may be a position where the circular button is located at a moment T7. For another example, refer to FIG. 6A. The first position is a position where the circular button is located at a moment T7, and the second position may be a position where the circular button is located at a moment T0.

For example, in a process that the first icon slides in the track, the shape and a size of the second icon are in a linear relationship with the sliding offset of the first icon. For another example, in a process that the first icon slides in the track, a size (such as a width or height) of the second icon in a specific direction is in a linear relationship with the sliding offset of the first icon.

The sliding offset of the first icon may be an offset of the first icon relative to an initial position (such as the first position or the second position).

In this way, in a process that the first icon slides in the switch control, the shape of the second icon displayed on the first icon changes linearly with the sliding offset of the first icon, so that a visual effect that attracts a user is added, thereby improving user experience in the use of the switch control.

According to the first aspect, when the first icon is located at the first position, colors of the track and the second icon are a first color. When the first icon is located at the second position, the colors of the track and the second icon are a second color. The display method further includes: When the first icon slides from a third position to the first position, the colors of the track and the second icon gradually change from the second color to the first color. When the first icon slides from the third position to the second position, the colors of the track and the second icon gradually change from the first color to the second color. The third position is a midpoint position between the first position and the second position.

In this way, in the process that the first icon slides in the track, the first icon slides to a midpoint position of the track and triggers a color changing animation effect of the switch control, so that user visual experience can be further improved.

According to any one of the first aspect or the implementations of the first aspect, a height of the first shape is equal to a height of the second shape. That in a process that the first icon slides in the track, a shape change of the second icon is in a linear relationship with a sliding offset of the first icon includes: In the process that the first icon slides in the track, a width of the second icon changes linearly with the sliding offset of the first icon.

According to any one of the first aspect or the implementations of the first aspect, when the switch control is in the OFF state, the second icon is circular. When the switch control is in the ON state, the second icon is rounded rectangular.

In this way, "I" and "O" symbols used for marking ON or OFF states on a mechanical switch are used in displaying the switch control to indicate an ON state or an OFF state of a function (a terminal function, or an application function, or the like) respectively, so as to improve user's awareness of the states of the switch control.

According to any one of the first aspect or the implementations of the first aspect, a center point of the first icon coincides with a center point of the second icon. In this way, an appearance of the switch control is more beautiful.

According to any one of the first aspect or the implementations of the first aspect, the display method further includes: In response to a tap operation on the switch control, the electronic device enables the first icon of the switch control to slide from the first position to the second position, or enables the first icon to slide from the second position to the first position. In this way, the user can trigger state switching of the switch control by a tap operation.

According to any one of the first aspect or the implementations of the first aspect, that in response to a tap operation on the switch control, the electronic device enables the first icon to slide from the first position to the second position, or enables the first icon to slide from the second position to the first position includes: In response to a touch operation on the switch control, the electronic device reduces sizes of the first icon and the second icon. In response to cancellation of the touch operation, the electronic device enables the first icon to slide from the first position to the second position, or enables the first icon to slide from the second position to the first position, and enlarges and restores the sizes of the first icon and the second icon.

In this way, in a state switching process of the switch control, reduction animation effects and enlarging animation effects of the first icon and the second icon of the switch control are added, so that user visual experience and use experience can be further improved.

According to any one of the first aspect or the implementations of the first aspect, that the first icon slides from the first position to the second position includes: After the first icon slides from the first position to a boundary of the track along a first direction, the first icon slides to the second position along a second direction. Correspondingly, that the first icon slides from the second position to the first position includes: After the first icon slides from the second position to the boundary of the track along the second direction, the first icon slides to the first position along the first direction. The first direction is a direction from the first position to the second position, and the second direction is a direction from the second position to the first position. In this way, in the process that the first icon slides in the track, a sliding rebound animation effect of the first icon is added, so that user visual experience can be further improved.

According to any one of the first aspect or the implementations of the first aspect, a key frame curve of a sliding animation of the first icon is a displacement curve of overdamped oscillation.

According to any one of the first aspect or the implementations of the first aspect, that in response to a tap operation on the switch control, the electronic device enables the first icon to slide from the first position to the second position, or enables the first icon to slide from the second position to the first position includes: In response to a tap operation on a hot zone of the switch control, the electronic device enables the first icon to slide from the first position to the second position, or enables the first icon to slide from the second position to the first position. A size of the hot zone of the switch control is larger than a size of the switch control, and a hot zone area of the switch control includes or partially includes a text description area corresponding to the switch control. In this way, the hot zone of the switch control is enlarged, to facilitate operation by the user on the switch control.

According to any one of the first aspect or the implementations of the first aspect, the display method further includes: In response to a slide operation on the switch control, the electronic device enables the first icon to slide in the track based on an operation offset. In response to stop of the slide operation, the electronic device enables the first icon to stop sliding. In response to cancellation of the slide operation, the electronic device enables the first icon to move to the first position or the second position. In this way, the user can also trigger the state switching of the switch control by the slide operation. In addition, a sliding animation of the first icon shows a finger-following sliding state, so that user's sense of control on the switch control can be improved.

According to any one of the first aspect or the implementations of the first aspect, that in response to a slide operation on the switch control, the electronic device enables the first icon to slide in the track based on an operation offset includes: In response to a touch operation on the switch control, the electronic device reduces sizes of the first icon and the second icon. In response to the slide operation on the switch control, the electronic device enables the first icon to slide in the track based on the operation offset. That in response to cancellation of the slide operation, the electronic device enables the first icon to move to the first position or the second position includes: In response to the cancellation of the slide operation, the first icon moves to the first position or the second position, and the sizes of the first icon and the second icon are enlarged and restored. In this way, in a state switching process of the switch control, reduction animation effects and enlarging animation effects of the first icon and the second icon of the switch control are added, so that user visual experience and use experience can be further improved.

According to any one of the first aspect or the implementations of the first aspect, that in response to cancellation of the slide operation, the electronic device enables the first icon to move to the first position or the second position includes: In response to the cancellation of the slide operation, the electronic device obtains a current position of the first icon in the track. When the current position is the first position or the second position, the first icon stops sliding. When the current position is between the first position and the third position, the first icon moves from the current position to the first position. When the current position is between the second position and the third position, the first icon moves from the current position to the second position. The third position is the midpoint position between the first position and the second position. In this way, when the user controls the switch control by a touch and slide operation or by a press and slide operation, a display animation of the switch control is related to a position where the user releases the switch control. In addition, the switch control can maintain or switch the ON/OFF state regardless of when the user releases the switch control.

According to any one of the first aspect or the implementations of the first aspect, that the first icon moves from the current position to the first position includes: After the first icon slides from the current position to a boundary of the track along a second direction, the first icon slides to the first position along a first direction. Correspondingly, that the first icon moves from the current position to the second position includes: After the first icon slides from the current position to the boundary of the track along the first direction, the first icon slides to the second position along the second direction. The first direction is a direction from the first position to the second position, and the second direction is a direction from the second position to the first position. In this way, in a process of finger-following sliding of the first icon, if the first icon does not slide to the first position or the second position when the user releases the first icon, the sliding animation effect of the first icon is displayed, and a sliding rebound animation effect of the first icon is added, so that user visual experience can be further improved.

According to any one of the first aspect or the implementations of the first aspect, a key frame curve of a sliding animation of the first icon is a displacement curve of overdamped oscillation. The sliding animation of the first icon is an animation in which the first icon moves from the current position to the first position or the second position.

According to any one of the first aspect or the implementations of the first aspect, that in response to a slide operation on the switch control, the electronic device enables the first icon to slide in the track based on an operation offset includes: In response to a slide operation on a hot zone of the switch control, the electronic device enables the first icon to slide in the track based on the operation offset. A size of the hot zone of the switch control is larger than a size of the switch control, and a hot zone area of the switch control includes or partially includes a text description area corresponding to the switch control. In this way, the hot zone of the switch control is enlarged, to facilitate operation by the user on the switch control.

According to any one of the first aspect or the implementations of the first aspect, a display color and/or transparency of the switch control matches a display mode of the electronic device. In this way, the switch control has high applicability and a user visual effect is better.

According to a second aspect, an embodiment of this application provides an electronic device. The electronic device includes one or more processors; a memory; and one or more computer programs. The one or more computer programs are stored in the memory. When the computer program is executed by the one or more processors, the electronic device is enabled to perform the switch control display method according to any one of the first aspect or the implementations of the first aspect.

Any one of the second aspect and the implementations of the second aspect corresponds to any one of the first aspect and the implementations of the first aspect respectively. For technical effects corresponding to any one of the second aspect and the implementations of the second aspect, refer to technical effects corresponding to any one of the first aspect and the implementations of the first aspect. Details are not described herein again.

According to a third aspect, an embodiment of this application provides a computer-readable storage medium. The computer-readable storage medium includes a computer program. When the computer program is run on an electronic device, the electronic device is enabled to perform the switch control display method according to any one of the first aspect and the implementations of the first aspect.

Any one of the third aspect and the implementations of the third aspect corresponds to any one of the first aspect and the implementations of the first aspect respectively. For technical effects corresponding to any one of the third aspect and the implementations of the third aspect, refer to technical effects corresponding to any one of the first aspect and the implementations of the first aspect. Details are not described herein again.

According to a fourth aspect, an embodiment of this application provides a computer program product, including a computer program. When the computer program is run, a computer is enabled to perform the switch control display method according to any one of the first aspect and the implementations of the first aspect.

Any one of the fourth aspect and the implementations of the fourth aspect corresponds to any one of the first aspect and the implementations of the first aspect respectively. For technical effects corresponding to any one of the fourth aspect and the implementations of the fourth aspect, refer to technical effects corresponding to any one of the first aspect and the implementations of the first aspect. Details are not described herein again.

According to a fifth aspect, this application provides a chip including a processing circuit and a transceiver pin. The transceiver pin and the processing circuit communicate with each other through an internal connection path. The processing circuit performs the switch control display method according to any one of the first aspect and the implementations of the first aspect, to control a receive pin to receive a signal, and to control a transmit pin to send a signal.

Any one of the fifth aspect and the implementations of the fifth aspect corresponds to any one of the first aspect and the implementations of the first aspect respectively. For technical effects corresponding to any one of the fifth aspect and the implementations of the fifth aspect, refer to technical effects corresponding to any one of the first aspect and the implementations of the first aspect. Details are not described herein again.

## BRIEF DESCRIPTION OF DRAWINGS

FIG. 1 is an example schematic diagram of a hardware structure of an electronic device;
FIG. 2 is an example schematic diagram of a software structure of an electronic device;
FIG. 3 is an example schematic diagram of a mechanical switch;
FIG. 4 is an example schematic diagram of a switch control;
FIG. 5A and FIG. 5B are example schematic diagrams of a size of a switch control;
FIG. 6A and FIG. 6B are example schematic diagrams of display changes of a switch control;
FIG. 7A is an example schematic diagram of a width of an IO symbol and an offset of a circular button;
FIG. 7B is an example schematic diagram a correspondence between a width of an IO symbol and an offset of a circular button;
FIG. 8 is an example schematic diagram of a damped oscillation curve;
FIG. 9 is an example schematic diagram of duration of a display animation effect of a switch control;
FIG. 10A to FIG. 10E are example schematic diagrams of display changes of a switch control;
FIG. 11 is an example schematic diagram of display changes a switch control;
FIG. 12 is an example schematic diagram a hot zone of a switch control;
FIG. 13 is a schematic diagram of a system hierarchy according to an embodiment of this application;
FIG. 14 is an example schematic diagram of an application scenario;
FIG. 15 is an example schematic diagram of an application scenario;
FIG. 16A and FIG. 16B are schematic diagrams of module interaction according to an embodiment of this application;
FIG. 16C is a schematic diagram of a structure of a module according to an embodiment of this application;
FIG. 17A and FIG. 17B are a schematic diagram of a display process of a switch control according to an embodiment of this application;
FIG. 18A and FIG. 18B are example schematic diagrams of application scenarios; and
FIG. 19 is an example schematic diagram of an application scenario.

## DESCRIPTION OF EMBODIMENTS

The technical solutions in embodiments of this application are clearly and completely described below with reference to the accompanying drawings in embodiments of this application. Apparently, the described embodiments are some rather than all of embodiments of this application. All other embodiments obtained by a person of ordinary skill in the art based on embodiments of this application without making creative efforts shall fall within the protection scope of this application.

The term "and/or" herein describes only an association relationship between associated objects and represents that three relationships may exist. For example, A and/or B may represent the following three cases: Only A exists, both A and B exist, and only B exists.

In the specification and claims in embodiments of this application, the terms "first", "second", and the like are intended to distinguish between different objects but do not indicate a particular sequence of the objects. For example, a first target object, a second target object, and the like are used to distinguish between different target objects, rather than describing a particular sequence of the target objects.

In embodiments of this application, the terms "exemplary" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner.

In the description of embodiments of this application, unless otherwise stated, "a plurality of" means two or more. For example, a plurality of processing units means two or more processing units, and a plurality of systems means two or more systems.

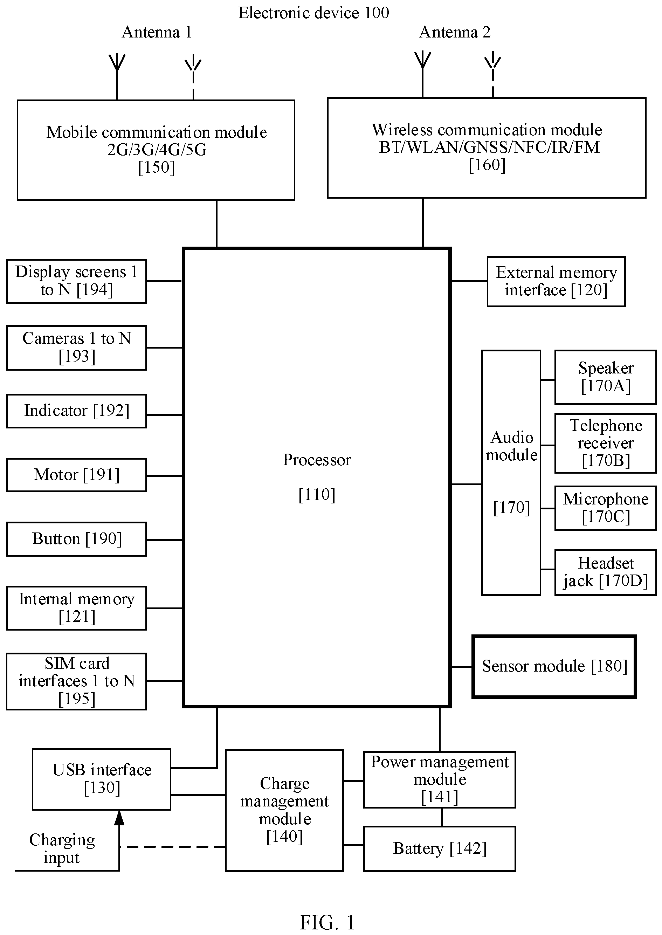

FIG. 1 is a schematic diagram of a structure of an electronic device 100. Optionally, the electronic device 100 may be a terminal, or may be referred to as a terminal device. The terminal may be a device with a camera, such as a cellular phone (cellular phone) or a tablet computer (pad). The terminal may alternatively be a large-screen device such as a smart screen. This is not limited in this application. It should be understood that the electronic device 100 shown in FIG. 1 is merely an example of the electronic device, and the electronic device 100 may have more or fewer components than those shown in the figure, may combine two or a plurality of components, or may have a different component configuration. The components shown in FIG. 1 may be implemented by hardware, software, or a combination of hardware and software including one or more signal processing and/or application-specific integrated circuits.

The electronic device 100 may include: a processor 110, an external memory interface 120, an internal memory 121, a universal serial bus (universal serial bus, USB) interface 130, a charge management module 140, a power management module 141, a battery 142, an antenna 1, an antenna 2, a mobile communication module 150, a wireless communication module 160, an audio module 170, a speaker 170A, a telephone receiver 170B, a microphone 170C, a headset jack 170D, a sensor module 180, a button 190, a motor 191, an indicator 192, a camera 193, a display screen 194, a subscriber identification module (subscriber identification module, SIM) card interface 195, and the like. The sensor module 180 may include a pressure sensor, a gyroscope sensor, an acceleration sensor, a temperature sensor, a motion sensor, an air pressure sensor, a magnetic sensor, a distance sensor, an optical proximity sensor, a fingerprint sensor, a touch sensor, an ambient light sensor, a bone conduction sensor, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video encoder and decoder, a digital signal processor (digital signal processor, DSP), a baseband processor, a neural-network processing unit (neural-network processing unit, NPU), and/or the like. Different processing units may be separate components, or may be integrated into one or more processors.

The controller may be a nerve center and a command center of the electronic device 100. The controller may generate an operation control signal based on an instruction operation code and a timing signal, to control instruction fetching and instruction execution.

A memory configured to store instructions and data may be further disposed in the processor 110. In some embodiments, the memory in the processor 110 is a cache.

The USB interface 130 is an interface that complies with USB standard specifications, and may be specifically a Mini USB interface, a Micro USB interface, a USB Type C interface, or the like.

The charge management module 140 is configured to receive charging input from a charger. The charger may be a wireless charger or a wired charger. The charge management module 140 may supply power to the electronic device by the power management module 141 while charging the battery 142. The power management module 141 is configured to be connected to the battery 142, the charge management module 140, and the processor 110. The power management module 141 receives input from the battery 142 and/or the charge management module 140, and supplies power to the processor 110, the internal memory 121, an external memory, the display screen 194, the camera 193, the wireless communication module 160, and the like.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna of the electronic device 100 may be configured to cover one or more communication frequency bands. Different antennas may also be reused to improve antenna utilization.

The mobile communication module 150 may provide a solution applied to the electronic device 100 for wireless communication such as 2G/3G/4G/5G. The mobile communication module 150 may include at least one filter, a switch, a power amplifier, a low noise amplifier (low noise amplifier, LNA), and the like.

The wireless communication module 160 may provide a solution applied to the electronic device 100 for wireless communication including a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), an infrared technology (infrared, IR), and the like.

In some embodiments, in the electronic device 100, the antenna 1 is coupled to the mobile communication module 150, and the antenna 2 is coupled to the wireless communication module 160, so that the electronic device 100 may communicate with a network and another device by using a wireless communications technology.

The electronic device 100 implements a display function by using the GPU, the display screen 194, the application processor, and the like. The processor 110 may include one or more GPUs that execute program instructions to generate or change display information.

The display screen 194 is configured to display an image, a video, and the like. The display screen 194 includes a display panel. In some embodiments, the electronic device 100 may include 1 or N display screens 194. N is a positive integer greater than 1.

The electronic device 100 may implement a photographing function by using the ISP, the camera 193, the video encoder and decoder, the GPU, the display screen 194, the application processor, and the like. The ISP is configured to process data fed back by the camera 193. The camera 193 is configured to capture a still image or a video. In some embodiments, the electronic device 100 may include 1 or N cameras 193. N is a positive integer greater than 1.

The external memory interface 120 may be configured to be connected to an external storage card such as a micro SD card, to expand a storage capability of the electronic device 100. The external storage card communicates with the processor 110 through the external memory interface 120, to implement a data storage function.

The internal memory 121 may be configured to store computer-executable program code. The executable program code includes instructions. The processor 110 runs the instructions stored in the internal memory 121, to implement various functional applications and data processing of the electronic device 100. For example, the electronic device 100 is enabled to implement a switch control display method in embodiments of this application. The internal memory 121 may include a program storage area and a data storage area. The program storage area may store an operating system, an application required by at least one function (such as a voice playing function and an image playing function), and the like. The data storage area may store data (for example, audio data and an address book) and the like created when the electronic device 100 is used. In addition, the internal memory 121 may include a highspeed random access memory, and may further include a non-volatile memory, for example, at least one magnetic disk storage device, a flash memory device, or a universal flash storage (universal flash storage, UFS).

The electronic device 100 may implement an audio function such as music playing or recording by using the audio module 170, the speaker 170A, the telephone receiver 170B, the microphone 170C, the headset jack 170D, the application processor, and the like.

The audio module 170 is configured to convert digital audio information into analog audio signal output, and is also configured to convert analog audio input into a digital audio signal. The audio module 170 may be further configured to encode and decode audio signals. In some embodiments, the audio module 170 may be disposed in the processor 110, or some function modules in the audio module 170 may be disposed in the processor 110.

The touch sensor is also referred to as a "touch panel". The touch sensor may be disposed on the display screen 194. The touch sensor and the display screen 194 form a touchscreen, also referred to as a "touch control screen". The touch sensor is configured to detect a touch operation performed on or near the touch sensor. The touch sensor may transfer the detected touch operation to the application processor to determine a type of a touch event. Visual output related to the touch operation may be provided by using the display screen 194.

The pressure sensor is configured to sense a pressure signal, and may convert the pressure signal into an electrical signal. In some embodiments, the pressure sensor may be disposed on the display screen 194. The electronic device 100 may further calculate a touch position based on a detection signal of the pressure sensor.

The gyroscope sensor may be configured to determine a motion posture of the electronic device 100. In some embodiments, an angular velocity of the electronic device 100 around three axes (that is, x, y, and z axes) may be determined by using the gyroscope sensor.

The acceleration sensor may detect an acceleration value of the electronic device 100 in each direction (generally three axes). When the electronic device 100 is still, the acceleration sensor may detect a magnitude and a direction of gravity. The acceleration sensor may be further configured to recognize a posture of the electronic device, and is applied to applications such as landscape/portrait mode switching and a pedometer.

The button 190 includes a power-on button (or referred to as a power button), a volume button, and the like. The button 190 may be a mechanical button or a touch button. The electronic device 100 may receive a button input, and generate a button signal input related to user settings and function control of the electronic device 100.

A software system of the electronic device 100 may use a layered architecture, an event-driven architecture, a microkernel architecture, a micro service architecture, or a cloud architecture. In this embodiment of this application, a software structure of the electronic device 100 is described by using an Android system with a layered architecture as an example.

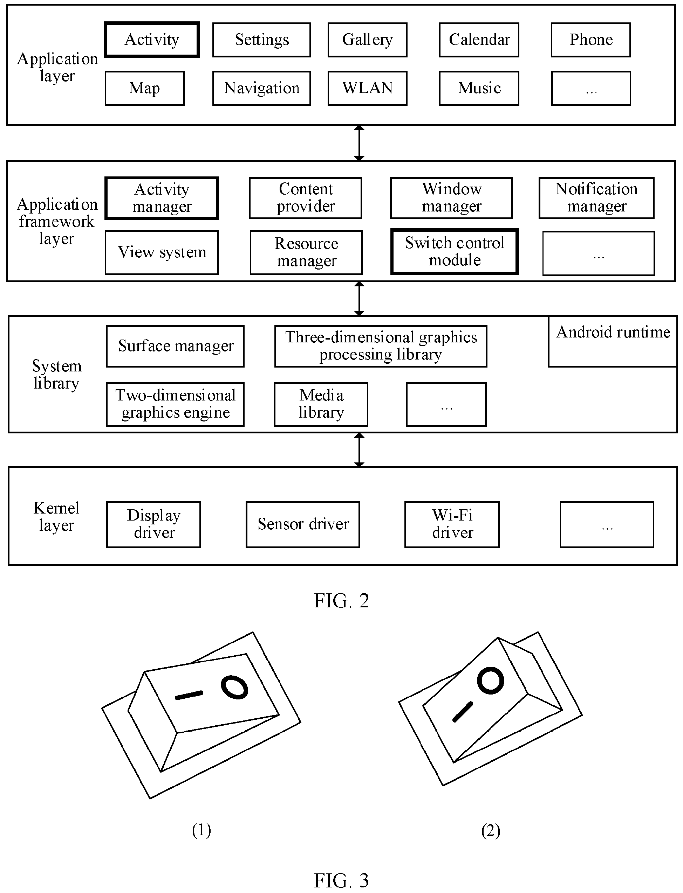

FIG. 2 is a block diagram of a software structure of the electronic device 100 according to an embodiment of this application.

In the layered architecture of the electronic device 100, software is divided into several layers, and each layer has a clear role and task. The layers communicate with each other through software interfaces. In some embodiments, the Android system is divided into four layers, which are an application layer, an application framework layer, an Android Runtime (Android Runtime) and system library, and a kernel layer from top to bottom.

The application layer may include a series of application packages.

As shown in FIG. 2, the application packages may include applications such as Activity, Settings, Gallery, Calendar, Phone, Map, Navigation, WLAN, Bluetooth, Music, Video, and Messages.

The Activity is an application component that provides a screen which may be used by a user to interact to complete a task. In an Android application, an Activity is usually a separate screen that may display some controls and may monitor, process, and response to a user event.

The application framework layer provides an application programming interface (application programming interface, API) and a programming framework for applications at the application layer. The application framework layer includes some predefined functions.

As shown in FIG. 2, the application framework layer may include an activity manager, a window manager, a content provider, a view system, a resource manager, a notification manager, a switch control module, and the like.

The activity manager (Activity Manager Service, AMS) is responsible for managing an Activity and is responsible for starting, switching, and scheduling components in the system, and managing and scheduling applications.

The window manager is configured to manage a window program. The window manager may obtain a size of a display screen, determine whether there is a status bar, perform screen locking, perform screen capturing, and the like.

The content provider is configured to store and obtain data and enable the data to be accessible by an application. The data may include a video, an image, audio, phone calls made and answered, a browsing history, favorites, a phone book, and the like.

The view system includes a visual control, for example, a control for displaying text or a control for displaying a picture. The view system may be configured to build an application. A display interface may include one or more views. For example, a display interface including an SMS notification icon may include a view for displaying text and a view for displaying a picture.

The resource manager provides an application with a variety of resources, such as a localized character string, an icon, a picture, a layout file, a video file, and the like.

The notification manager enables an application to display a notification information in a status bar. The notification information may be used for conveying an informative message that may disappear automatically after a short period of time without user interaction. For example, the notification manager is used for informing completion of downloading, for message alerts, and the like. The notification manager may alternatively provide, on a status bar at the top of the system, a notification in a form of a chart or scroll bar text, for example, a notification of an application running in the background, or provide, on a screen, a notification in a form of a dialog window. For example, text information is displayed in the status bar, a prompt tone is generated, an electronic device vibrates, and an indicator light blinks.

In this embodiment, the switch control module is configured to implement a switch control display method detailed below. Specifically, the switch control module may be configured to implement reduction animation effects of a circular button and an IO symbol, moving animation effects of the circular button and the IO symbol, a shape changing animation effect of the IO symbol, color changing animation effects of a background track and the IO symbol, rebound animation effects of the circular button and the IO symbol, enlarging animation effects of the circular button and the IO symbol, and finger-following moving animation effects of the circular button and the IO symbol mentioned below.

The Android Runtime includes a kernel library and a virtual machine. The Android runtime is responsible for scheduling and managing an Android system.

The kernel library includes two parts. One part is a functional function that needs to be invoked by the java language, and the other part is an Android kernel library.

The application layer and the application framework layer are run in the virtual machine. The virtual machine executes java files of the application layer and the application framework layer as binary files. The virtual machine is used to execute functions such as object lifecycle management, stack management, thread management, security and exception management, and garbage collection.

The system library may include a plurality of function modules, for example, a surface manager (surface manager), a media library (Media Libraries), a three-dimensional graphics processing library (for example, an OpenGL ES), and a 2D graphics engine (for example, an SGL).

The surface manager is configured to manage a display subsystem and provide fusion of 2D and 3D layers for a plurality of applications.

The media library supports playback and recording of a plurality of commonly used audio and video formats, and static image files. The media library may support a plurality of audio and video encoding formats, such as MPEG4, H.264, MP3, AAC, AMR, JPG, and PNG.

The three-dimensional graphics processing library is configured to implement three-dimensional graphics drawing, image rendering, compositing, layer processing, and the like.

The 2D graphics engine is a drawing engine for 2D drawing.

The kernel layer is a layer between hardware and software. The kernel layer includes at least a display driver, a Wi-Fi driver, a sensor driver, and the like. The hardware includes at least a processor, a display screen, a Wi-Fi module, a sensor, and the like.

It may be understood that the layers in the software structure shown in FIG. 2 and the components included in the layers do not constitute a specific limitation on the electronic device 100. In other embodiments of this application, the electronic device 100 may include more or fewer layers than shown in the figure, and each layer may include more or fewer components. This is not limited in this application.

It may be understood that, to implement the switch control display method in embodiments of this application, the electronic device includes corresponding hardware and/or software modules that perform the functions. Algorithm steps in the examples described with reference to embodiments disclosed in this specification can be implemented by hardware or a combination of hardware and computer software in this application. Whether a function is performed by hardware or computer software driving hardware depends on particular applications and design constraint conditions of the technical solutions. A person of skill in the art may use different methods to implement the described functions with reference to embodiments for each particular application, but it should not be considered that the implementation goes beyond the scope of this application.

For ease of understanding, a switch control display method provided in embodiments of this application is explained in detail below with reference to the accompanying drawings.

FIG. 3 is a schematic diagram of an ON state and an OFF state of a mechanical switch.

In the technical specification compiled by the International Electrotechnical Commission (IEC), it is proposed to use "I" and "O" as symbols for power on/off cycles. China also makes it clear that the symbol "I" represents a circuit closed (that is, ON), and the symbol "O" represents a circuit opened (that is, OFF). As shown in FIG. 3, the mechanical switch is marked with two symbols "I" and "O", indicating an ON state and an OFF state of the mechanical switch respectively. When a user presses an end of the mechanical switch marked with the symbol "O", a circuit controlled by the mechanical switch is opened. In this case, the mechanical switch indicates the OFF state of the circuit. Refer to section (1) of FIG. 3. When a user presses an end of the mechanical switch marked with the symbol "I", a circuit controlled by the mechanical switch is closed. In this case, the mechanical switch indicates the ON state of the circuit. Refer to section (2) of FIG. 3. In this way, a user may perform a related operation on the mechanical switch based on the "I" and "O" symbols marked on the mechanical switch to control closing or opening of the corresponding circuit.

In this embodiment of this application, the "I" and "O" symbols used for identifying ON or OFF states on the mechanical switch are used in displaying a switch control on a terminal interface, to indicate an ON state or an OFF state of a function (a terminal function, or an application function, or the like) respectively, so as to improve user's awareness of the states of the switch control.

Section (1) of FIG. 4 and section (2) of FIG. 4 respectively show schematic diagrams when a switch control provided in this embodiment is in an OFF state and an ON state.

Refer to FIG. 4. A switch control 20 includes a background track 201, a circular button 202, an IO symbol 203, and a circular outline 2021. The circular outline 2021 is an outline of the circular button 202. It should be noted that the circular button 202 and the circular outline 2021 may be understood as a whole, and relative positions of the circular button 202 and the circular outline 2021 do not change. For example, a color of the circular button 202 is white.

As shown in FIG. 4, the IO symbol 203 is displayed on the circular button 202, and a center point of the IO symbol 203 coincides with a center point of the circular button 202. In addition, a color of the IO symbol 203 is the same as a color of the background track 201.

The circular button 202 may slide (or move) along a horizontal direction of the background track 201. As positions of the circular button 202 sliding in the background track are different, display forms of the IO symbol 203 are different. In other words, as the circular button 202 slides in the background track, a display form of the IO symbol 203 gradually changes. The IO symbol 203 may be understood as a rounded rectangle. As the circular button 202 slides in the background track, a width of the IO symbol 203 gradually changes, but a height of the IO symbol 203 does not change.

As shown in section (1) of FIG. 4, when the circular button 202 slides to a left end of a sliding area of the background track 201, the display form of the IO symbol 203 is an O shape (with equal width and height) that may also be referred to as a dot shape. In this case, the switch control is in the OFF state. As shown in section (2) of FIG. 4, when the circular button 202 slides to a right end of the sliding area of the background track 201, the display form of the IO symbol 203 is an I shape (with different width and height) that may also be referred to as a vertical bar shape. In this case, the switch control is in the ON state. When the circular button 202 is located at a position between the left end and the right end of the sliding area of the background track 201, the display form of the IO symbol 203 is between an O shape and an I shape (with a height unchanged). For detailed explanation, refer to the following description.

The sliding area of the background track 201 may be understood as a preset area in the background track that allows the circular button to slide. The circular button 202 sliding to the left end of the sliding area of the background track 201 may be understood as that a left boundary of the circular button 202 is tangent to a left boundary of the sliding area of the background track 201. The circular button 202 sliding to the right end of the sliding area of the background track 201 may be understood as that a right boundary of the circular button 202 is tangent to a right boundary of the sliding area of the background track 201. In addition, it may be understood that a length of the sliding area of the background track 201 is less than a length of the background track 201 in the horizontal direction.

The following describes a size of the switch control provided in this embodiment in an optional implementation.

With reference to FIG. 5A and FIG. 5B, the background track 201 is a rounded rectangle, and a rounded corner size of the rounded rectangle is half of a height of the background track 201. The length of the background track 201 in the horizontal direction (that is, a width of the background track 201) is 42 dp, and a length of the background track 201 in a vertical direction (that is, the height of the background track 201) is 24 dp. A distance between the left boundary of the sliding area of the background track 201 and a left boundary of the background track 201 is 3 dp, and a distance between the right boundary of the sliding area of the background track 201 and a right boundary of the background track 201 is 3 dp. It may be learned that a length of the sliding area of the background track 201 in the horizontal direction is 36 dp.

With reference to FIG. 5A and FIG. 5B, a diameter of the circular button 202 is 18 dp. For example, a width of the circular outline 2021 of the circular button 202 is 1 dp.

As shown in FIG. 5A, when the switch control is in the OFF state, the circular button 202 slides to the left end of the sliding area of the background track 201, and the display form of the IO symbol 203 is an O shape (or a dot shape). A diameter of the IO symbol 203 is 6 dp, that is, a width and a height of the IO symbol 203 are both 6 dp, and the rounded corner size is half a width of the rounded rectangle (that is, 3 dp).

As shown in FIG. 5B, when the switch control is in the ON state, the circular button 202 slides to the right end of the sliding area of the background track 201, and the display form of the IO symbol 203 is an I shape (or a vertical bar shape). In this case, the height of the IO symbol 203 is 6 dp, the width is 1.5 dp, and the rounded corner size is half a width of the rounded rectangle (that is, 0.75 dp).

An embodiment of this application further provides a switch control display method. A user may control a switch control by performing different operations, so that the switch control is in an ON state or an OFF state. For example, the user may control the switch control by a tap operation or a slide operation (or a drag operation). The following uses a tap operation and a slide operation as examples respectively to describe the switch control display method provided in this embodiment.

Scenario 1

In this scenario, an example in which a user operation is a tap operation is used to describe the switch control display method.

(1) When the switch control is in the OFF state, the user taps the switch control, and in response to the operation performed by the user on the switch control, a display state of the switch control switches from OFF to ON. For a change process of the switch control, refer to FIG. 6A.

As shown in FIG. 6A, at a moment T0, the switch control is in the OFF state. At this time, a circular button is located at a left end of a sliding area of a background track. When the user taps the switch control, the user may tap any area of the switch control, and the switch control performs a switching process from the OFF state to the ON state. Animation effects shown when the switch control performs the switching process from the OFF state to the ON state include but are not limited to: reduction animation effects of the circular button and an IO symbol, moving animation effects of the circular button and the IO symbol, a shape changing animation effect of the IO symbol, color changing animation effects of the background track and the IO symbol, rebound animation effects of the circular button and the IO symbol, and enlarging animation effects of the circular button and the IO symbol. It should be noted that some of the foregoing animation effects may occur at the same time.

Refer to FIG. 6A. When a finger of the user presses or touches the switch control, the circular button and the IO symbol perform the reduction animation effects. For example, the circular button and the IO symbol perform animation effects of reducing sizes from 100% to 94%, and animation duration is 50 ms. For the switch control with the reduced circular button and the reduced IO symbol, refer to the switch control at a moment T1. For example, a key frame curve used in reduction animations of the circular button and the IO symbol may be a Bézier curve, such as a native sharp curve of an Android system. A key frame curve, also referred to as a key frame interpolation, is a key technology for animation production in a three-dimensional process. The key frame curve is actually a complementary frame automatically calculated by a computer between two key frames, which has a certain degree of controllability. Different animation effects can be achieved by adjusting the key frame curve.

When the finger of the user releases the switch control, the moving animation effects of the circular button and the IO symbol and the shape changing animation effect of the IO symbol are triggered. For the switch control showing the moving animation effects, refer to the switch control at a moment T2 in FIG. 6A. The circular button and the IO symbol move rightward along a horizontal centerline of the background track, and a shape of the IO symbol changes as the IO symbol moves. A width of the IO symbol gradually decreases, a height remains unchanged, and a rounded corner of the IO symbol is always half the width.

Still refer to FIG. 6A. At a moment T3, the circular button and the IO symbol move to a midpoint of the sliding area of the background track, that is, to a midpoint of the background track in a horizontal direction. Compared with the moment T2, positions of the circular button and the IO symbol in the background track are further to the right, and the width of the IO symbol is smaller.

It should be noted that during movement of the circular button and the IO symbol and shape changing of the IO symbol, a center point of the IO symbol always coincides with a center point of the circular button. The width of the IO symbol is proportional to an offset of the circular button in the sliding area of the background track.

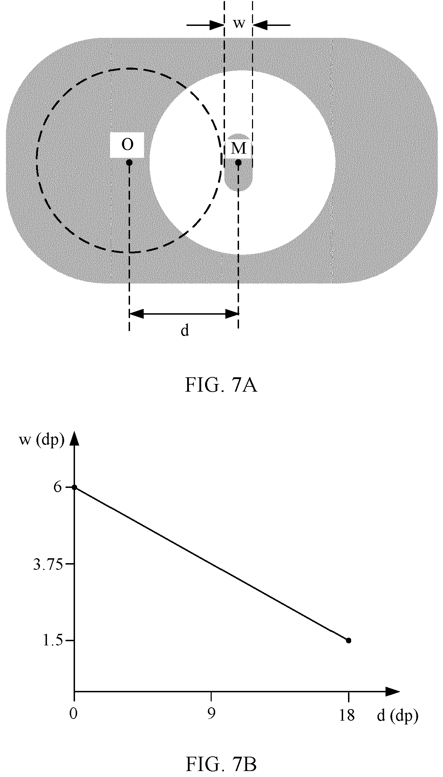

For example, assuming that when the switch state is OFF, the offset of the circular button in the background track is 0, then based on the size of the switch control given in the foregoing embodiment, when the switch control is in the ON state, the offset of the circular button in the background track is 18. As shown in FIG. 7A, when the switch state is OFF, a center of the circular button is at a point O. In this case, the offset d of the circular button in the background track is 0. When the center of the circular button moves to a point M, the offset d of the circular button in the background track is MO. MO represents a distance between the point M and the point O. As shown in FIG.7B, the width w of the IO symbol is inversely proportional to the offset d of the circular button in the sliding area of the background track. A larger offset d indicates a smaller width w of the IO symbol. When the offset d is 0 dp, the width w of the IO symbol is 6 dp. In this case, the switch control is in the OFF state. When the offset d is 18 dp, the width w of the IO symbol is 1.5 dp. In this case, the switch control is in the ON state.

With reference to FIG. 6A and FIG. 7B, from the moment T0 to a moment T7, as the circular button gradually moves rightward in the background track, the offset of the circular button in the background track gradually increases, and the width of the IO symbol gradually decreases. At the moment T0, the switch control is in the OFF state, the offset of the circular button in the background track is 0, and the width of the IO symbol is 6 dp. At the moment T3 and a moment T4, the offset of the circular button in the background track is 9, and the width of the IO symbol is 3.75 dp. At the moment T7, the switch control is in the ON state, the offset of the circular button in the background track is 18, and the width of the IO symbol is 1.5 dp.

It should be noted that a mapping relationship between the width w of the IO symbol and the offset d of the circular button in the sliding area of the background track as shown in FIG. 7B does not take the reduction animation effect of the IO symbol into consideration. If the reduction animation effect of the IO symbol is taken into consideration, the width of the IO symbol is multiplied by a corresponding reduction ratio. Details are not described herein again.

Still refer to FIG. 6A. At the moment T3, the circular button and the IO symbol move to the midpoint of the sliding area of the background track, that is, to the midpoint of the background track in the horizontal direction, and the color changing animation effects of the background track and the IO symbol are triggered. Still refer to FIG. 6A. At the moment T4, colors of the background track and the IO symbol begin to change. For example, when the switch state is OFF, the colors of the background track and the IO symbol are #E5E5E5. When the switch state is ON, the colors of the background track and the IO symbol are #256FFF (or a tone when a control is activated in an Android system). Still refer to FIG. 6A. At the moment T7, the switch state is ON, and the color changing animation effects of the background track and the IO symbol are shown between the moment T4 and the moment T7. For example, the color #E5E5E5 gradually changes to the color #256FFF. For example, a key frame curve used in color changing animations of the background track and the IO symbol may be a fastOutSlowIn (fast out and slow in) curve, such as a native standard curve of Android.

It should be noted that the color of the background track and the color of the IO symbol are always the same. In addition, a time difference between the moment T4 and the moment T3 is extremely small and related to response duration of color drawing. The user cannot perceive the time difference by naked eyes.

In an optional implementation, the color changing animation effects of the background track and the IO symbol may alternatively be replaced with color and transparency changing animation effects of the background track and the IO symbol. This is not limited in this embodiment. Similarly, at the moment T3, the circular button and the IO symbol move to the midpoint of the sliding area of the background track, that is, to the midpoint of the background track in the horizontal direction, and the color and transparency changing animation effects of the background track and the IO symbol are triggered. Still refer to FIG. 6A. At the moment T4, the colors and transparency of the background track and the IO symbol begin to change. For example, when the switch state is OFF, the colors of the background track and the IO symbol are #E5E5E5, and the transparency is 10%. When the switch state is ON, the colors of the background track and the IO symbol are #256FFF (or a tone when a control is activated in an Android system), and the transparency is 100%. Still refer to FIG.

6A. At the moment T7, the switch state is ON, and the color and transparency changing animation effects of the background track and the IO symbol are shown between the moment T4 and the moment T7. For example, the color #E5E5E5 gradually changes to the color #256FFF, and the transparency 10% gradually changes to the transparency 100%. For example, a key frame curve used in color and transparency changing animations of the background track and the IO symbol may be a fastOutSlowIn (fast out and slow in) curve, such as a native standard curve of an Android system.

In this embodiment, a key frame curve used in moving animations of the circular button and the IO symbol may be an elastic curve. The mathematical principle of the elastic curve is damped oscillation.

A resistance for an object moving in a fluid is proportional to a speed of the object:

$$f1 = -\gamma * v.$$

$f1$ is frictional resistance, v is velocity, $\gamma$ is a damping coefficient, and a resistance direction is opposite to a speed direction.

It may be learned from the Hooke's law:

$$f2 = -k * x.$$

$f2$ is an elastic restoring force, $k$ is a spring stiffness coefficient, and x is a spring deformation length.

It may be learned from the Newton's second law:

$$F = m * a.$$

F is an external force, m is mass of the object, and a is acceleration of the object.

The external force F is a resultant force of the elastic restoring force $f2$ and the frictional resistance $f1$, and the following may be obtained:

$$F = -\gamma * v - k * x.$$

From this, $m*a = -\gamma*v-k*x$.

The foregoing equation is converted into a differential equation form, and the following may be obtained:

$$m * \frac{d^2x}{dt^2} = -\gamma * \frac{dx}{dt} - k * x.$$

In the differential equation, a damping coefficient $\beta$ and a natural frequency $\theta$ are introduced to obtain a second-order differential equation of damped oscillation:

$$\frac{d^2x}{dt^2} + 2\beta * \frac{dx}{dt} + \theta^2 x = 0, \text{ where } \beta = \frac{\gamma}{2m}, \text{ and } \theta = \sqrt{\frac{k}{m}}.$$

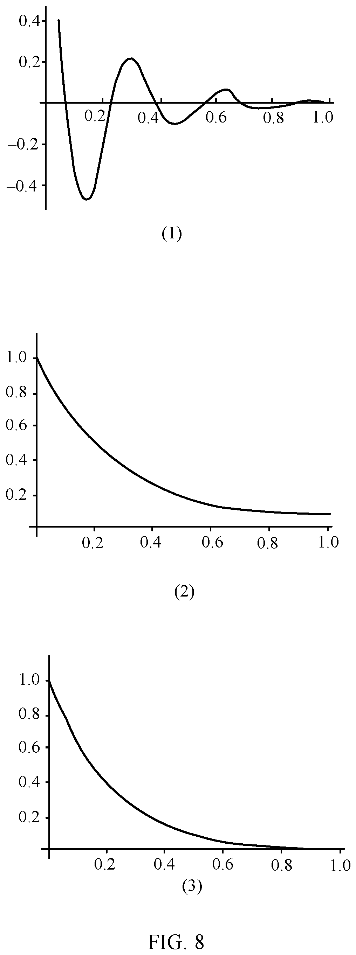

When $\beta^2 < \theta^2$, the damped oscillation is underdamped oscillation, and a correspondence between elastic displacement of the object and time may be shown in section (1) of FIG. 8. When $\beta^2 > \theta^2$, the damped oscillation is overdamped oscillation, and a correspondence between elastic displacement of the object and time may be shown in section (2) of FIG. 8. When $\beta^2 = \theta^2$, the damped oscillation is critically damped oscillation, and a correspondence between elastic displacement of the object and time may be shown in section (3) of FIG. 8.

(1) A condition for the underdamped oscillation is $\gamma^2 < 4mk$, that is, a damping ratio $\frac{\gamma}{2\sqrt{mk}} < 1$.

A displacement formula for the underdamped oscillation is $x(t) = e^{\alpha t}(c_1 \cos \omega t + c_2 \sin \omega t)$. $\alpha = -\frac{\gamma}{2m}$, $c_1 = p_0$,

$$c_2 = \frac{v_0 - \alpha \times p_0}{\omega} \; , \; \omega = \frac{\sqrt{4mk - \gamma^2}}{2m}$$ , v0 is initial velocity of the object, p0 is initial displacement of the object relative to an equilibrium point, t is time, and $x(t)$ is elastic displacement of the object.

(2) A condition for the overdamped oscillation is $\gamma^2 > 4mk$, that is, a damping ratio $\frac{\gamma}{2\sqrt{mk}} > 1$.

A displacement formula for the overdamped oscillation is $x(t) = c_1 e^{\alpha_1 t} + c_2 e^{\alpha_2 t}$

$c_1 = p_0 - c_2$, $\quad c_2 = \frac{v_0 - \alpha_1 \times p_0}{\alpha_2 - \alpha_1}$, $\quad \alpha_1 = \frac{(-\gamma - \sqrt{\gamma^2 - 4mk})}{2m}$, and $\alpha_2 = \frac{(-\gamma + \sqrt{\gamma^2 - 4mk})}{2m}$.

(3) A condition for the critically damped oscillation is $\gamma^2 = 4mk$, that is, a damping ratio $\frac{\gamma}{2\sqrt{mk}} = 1$.

A displacement formula for the critical damped oscillation is $x(t) = (c_1 + c_2 t)e^{\alpha t}$, where $\alpha = -\frac{\gamma}{2m}$, $c_1 = p_0$, and $c_2$ = $v_0 - \alpha \times p_0$.

In this embodiment, the elastic curve used as the key frame curve in the moving animations of the circular button and the IO symbol corresponds to the overdamped oscillation. The damping coefficient $\gamma$ is set to 24, the spring stiffness coefficient $k$ is set to 300, and the mass $m$ of the object is 1 in default.

Because the elastic curve used as the key frame curve in the moving animations of the circular button and the IO symbol corresponds to the overdamped oscillation, as the circular button moves in the background track, the circular button moves to a right boundary of the background track and then rebounds. To be specific, the circular button touches a right boundary of the background track and then moves in an opposite direction, to show the rebound animation effects of the circular button and the IO symbol. An elastic curve used as a key frame curve in rebound animations may also correspond to the foregoing overdamped oscillation.

Still refer to FIG. 6A. At a moment T5, the circular button continues to move rightward in the sliding area of the background track. When moving to a right end of the sliding area of the background track, the circular button does not stop moving, but continues to move rightward until reaches the right boundary of the background track. Refer to a dashed line box in the schematic diagram of the switch control at a moment T6. At this time, the circular button touches the boundary and rebounds (that is, moves in the opposite direction), and moves leftward in the background track back to the right end of the sliding area of the background track. Refer to the schematic diagram of the switch control at the moment T7. The circular button moving to the right boundary of the background track may be understood as that a right boundary of the circular button is tangent to the right boundary of the background track, or may be understood as that a right boundary of an outline of the circular button is tangent to the right boundary of the background track. This is not limited in this embodiment.

In an optional implementation, after the circular button moves to the right end of the sliding area of the background track, in a process that the circular button continues to move rightward to the right boundary of the background track and in a process that the circular button touches the boundary and rebounds, the width of the IO symbol no longer changes.

Optionally, after the circular button moves to the right end of the sliding area of the background track, in a process that the circular button continues to move rightward to the right boundary of the background track and in a process that the circular button touches the boundary and rebounds, the colors of the IO symbol and the background track no longer change.

In another optional implementation, after the circular button moves to the right end of the sliding area of the background track, in a process that the circular button continues to move rightward to the right boundary of the background track and in a process that the circular button touches the boundary and rebounds, the width of the IO symbol still changes. After the circular button moves to the right end of the sliding area of the background track, in the process that the circular button continues to move rightward to the right boundary of the background track and in the process that the circular button touches the boundary and rebounds, the width of the IO symbol first decreases and then increases.

Still refer to FIG. 6A. At the moment T7, the sizes of the circular button and the IO symbol in the switch control are restored to the sizes before reduction.

In a possible implementation, in a process that the circular button and the IO symbol rebound, the circular button and the IO symbol perform the enlarging animation effects. For example, the circular button and the IO symbol perform animation effects of restoring the sizes from 94% to 100%, and animation duration is 50 ms.

In another optional implementation, after the circular button and the IO symbol rebound to the right end of the sliding area of the background track, the circular button and the IO symbol perform the enlarging animation effects. For example, the circular button and the IO symbol perform animation effects of restoring the sizes from 94% to 100%, and animation duration is 50 ms.

For example, a key frame curve used in enlarging animations of the circular button and the IO symbol may be a Bézier curve, such as a native sharp curve of an Android system.

At this point, the display state of the switch control is switched from OFF to ON.

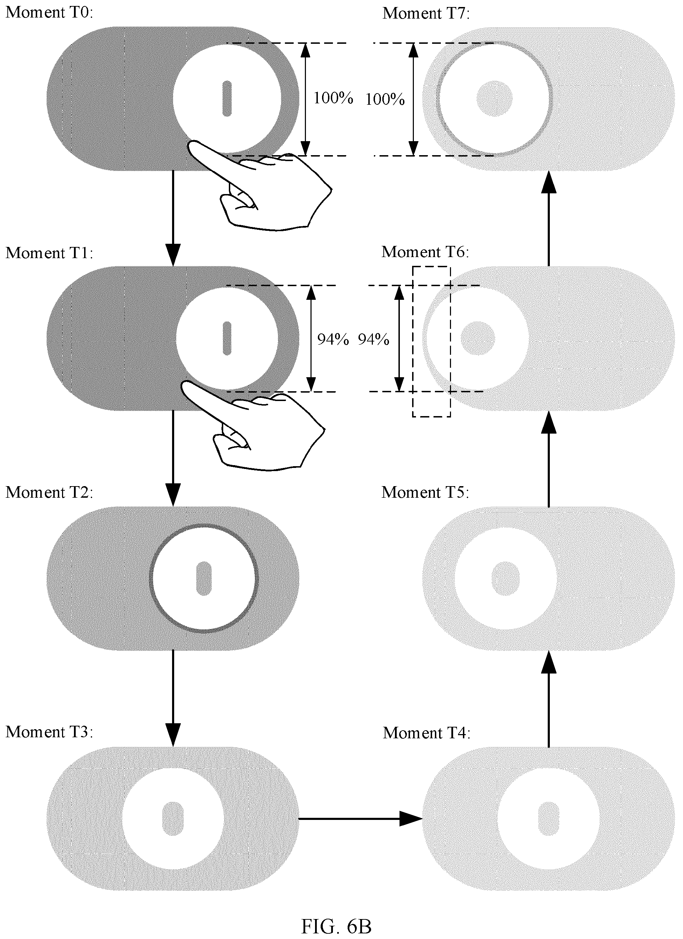

(2) When the switch control is in the ON state, the user taps the switch control, and in response to the operation performed by the user on the switch control, a display state of the switch control switches from ON to OFF. For a change process of the switch control, refer to FIG. 6B.

As shown in FIG. 6B, at a moment T0, the switch control is in the ON state. At this time, a circular button is located at a right end of a sliding area of a background track. When the user taps the switch control, the user may tap any area of the switch control, and the switch control performs a switching process from the ON state to the OFF state. Animation effects shown when the switch control performs the switching process from the ON state to the OFF state include but are not limited to: reduction animation effects of the circular button and an IO symbol, moving animation effects of the circular button and the IO symbol, a shape changing animation effect of the IO symbol, color changing animation effects of the background track and the IO symbol, rebound animation effects of the circular button and the IO symbol, and enlarging animation effects of the circular button and the IO symbol. It should be noted that some of the foregoing animation effects may occur at the same time.

Refer to FIG. 6B. When a finger of the user presses or touches the switch control, the circular button and the IO symbol perform the reduction animation effects. For example, the circular button and the IO symbol perform animation effects of reducing sizes from 100% to 94%, and animation duration is 50 ms. For the switch control with the reduced circular button and the reduced IO symbol, refer to the switch control at a moment T1. For example, a key frame curve used in reduction animations of the circular button and the IO symbol may be a Bézier curve, such as a native sharp curve of an Android system.

When the finger of the user releases the switch control, the moving animation effects of the circular button and the IO symbol and the shape changing animation effect of the IO symbol are triggered. For the switch control showing the moving animation effects, refer to the switch control at a moment T2 in FIG. 6A. The circular button and the IO symbol move leftward along a horizontal centerline of the background track, and a shape of the IO symbol changes as the IO symbol moves. A width of the IO symbol gradually increases, a height remains unchanged, and a rounded corner of the IO symbol is always half the width.

Still refer to FIG. 6B. At a moment T3, the circular button and the IO symbol move to a midpoint of the sliding area of the background track, that is, to a midpoint of the background track in a horizontal direction. Compared with the moment T2, positions of the circular button and the IO symbol in the background track are further to the left, and the width of the IO symbol is larger.

It should be noted that during movement of the circular button and the IO symbol and shape changing of the IO symbol, a center point of the IO symbol always coincides with a center point of the circular button. The width of the IO symbol is proportional to an offset of the circular button in the sliding area of the background track.

With reference to FIG. 6A and FIG. 7B, from the moment T0 to a moment T7, as the circular button gradually moves leftward in the background track, the offset of the circular button in the background track gradually decreases, and the width of the IO symbol gradually increases. At the moment T0, the switch control is in the ON state, the offset of the circular button in the background track is 18, and the width of the IO symbol is 1.5 dp. At the moment T3 and a moment T4, the offset of the circular button in the background track is 9, and the width of the IO symbol is 3.75 dp. At the moment T7, the switch control is in the OFF state, the offset of the circular button in the background track is 0, and the width of the IO symbol is 6 dp.

It should be noted that a mapping relationship between the width w of the IO symbol and the offset d of the circular button in the sliding area of the background track as shown in FIG. 7B does not take the reduction animation effect of the IO symbol into consideration. If the reduction animation effect of the IO symbol is taken into consideration, the width of the IO symbol is multiplied by a corresponding reduction ratio. Details are not described herein again.

Still refer to FIG. 6B. At the moment T3, the circular button and the IO symbol move to the midpoint of the sliding area of the background track, that is, to the midpoint of the background track in the horizontal direction, and the color changing animation effects of the background track and the IO symbol are triggered. Still refer to FIG. 6B. At the moment T4, colors of the background track and the IO symbol begin to change. For example, when the switch state is ON, the colors of the background track and the IO symbol are #256FFF (or a tone when a control is activated in an Android system). When the switch state is OFF, the colors of the background track and the IO symbol are #E5E5E5. Still refer to FIG. 6B. At the moment T7, the switch state is OFF, and the color changing animation effects of the background track and the IO symbol are shown between the moment T4 and the moment T7. For example, the color #256FFF gradually changes to the color #E5E5E5. For example, a key frame curve used in color changing animations of the background track and the IO symbol may be a fastOutSlowIn (fast out and slow in) curve, such as a native standard curve of Android.

It should be noted that the color of the background track and the color of the IO symbol are always the same. In addition, a time difference between the moment T4 and the moment T3 is extremely small and related to response duration of color drawing. The user cannot perceive the time difference by naked eyes.

In an optional implementation, the color changing animation effects of the background track and the IO symbol may alternatively be replaced with color and transparency changing animation effects of the background track and the IO symbol. This is not limited in this embodiment. Similarly, at the moment T3, the circular button and the IO symbol move to the midpoint of the sliding area of the background track, that is, to the midpoint of the background track in the horizontal direction, and the color and transparency changing animation effects of the background track and the IO symbol are triggered. Still refer to FIG. 6B. At the moment T4, the colors and transparency of the background track and the IO symbol begin to change. For example, when the switch state is ON, the colors of the background track and the IO symbol are #256FFF (or a tone when a control is activated in an Android system), and the transparency is 100%. When the switch state is, the colors of the background track and the IO symbol are #E5E5E5, and the transparency is 10%. Still refer to FIG. 6B. At the moment T7, the switch state is OFF, and the color and transparency changing animation effects of the background track and the IO symbol are shown between the moment T4 and the moment T7. For example, the color #256FFF gradually changes to the color #E5E5E5, and the transparency 100% gradually changes to the transparency 10%. For example, a key frame curve used in color and transparency changing animations of the background track and the IO symbol may be a fastOutSlowIn (fast out and slow in) curve, such as a native standard curve of an Android system.

In this embodiment, a key frame curve used in moving animations of the circular button and the IO symbol may be an elastic curve. The elastic curve used as the key frame curve in the moving animations of the circular button and the IO symbol corresponds to overdamped oscillation. A damping coefficient $\gamma$ is set to 24, a spring stiffness coefficient $k$ is set to 300, and mass $m$ of an object is 1 in default.

Because the elastic curve used as the key frame curve in the moving animations of the circular button and the IO symbol corresponds to the overdamped oscillation, as the circular button moves in the background track, the circular button moves to a left boundary of the background track and then rebounds. To be specific, the circular button touches a left boundary of the background track and then moves in an opposite direction, to show the rebound animation effects of the circular button and the IO symbol. An elastic curve used as a key frame curve in rebound animations may also correspond to the foregoing overdamped oscillation.

Still refer to FIG. 6B. At a moment T5, the circular button continues to move leftward in the sliding area of the background track. When moving to a left end of the sliding area of the background track, the circular button does not stop moving, but continues to move leftward until reaches the left boundary of the background track. Refer to the schematic diagram of the switch control at a moment T6. At this time, the circular button touches the boundary and rebounds, and moves rightward in the background track back to the left end of the sliding area of the background track. Refer to the schematic diagram of the switch control at the moment T7. The circular button moving to the left boundary of the background track may be understood as that a left boundary of the circular button is tangent to the left boundary of the background track, or may be understood that a left boundary of an outline of the circular button is tangent to the left boundary of the background track. This is not limited in this embodiment.

In an optional implementation, after the circular button moves to the left end of the sliding area of the background track, in a process that the circular button continues to move leftward to the left boundary of the background track and a in a process that the circular button touches the boundary and rebounds, the width of the IO symbol no longer changes.

Optionally, after the circular button moves to the left end of the sliding area of the background track, in a process that the circular button continues to move leftward to the left boundary of the background track and in a process that the circular button touches the boundary and rebounds, the colors of the IO symbol and the background track no longer change.

In another optional implementation, after the circular button moves to the left end of the sliding area of the background track, in a process that the circular button continues to move leftward to the left boundary of the background track and in a process that the circular button touches the boundary and rebounds, the width of the IO symbol still changes. After the circular button moves to the left end of the sliding area of the background track, in the process that the circular button continues to move leftward to the left boundary of the background track and in the process that the circular button touches the boundary and rebounds, the width of the IO symbol first increases and then decreases.

Still refer to FIG. 6B. At the moment T7, the sizes of the circular button and the IO symbol in the switch control are restored to the sizes before reduction.

In a possible implementation, in a process that the circular button and the IO symbol rebound, the circular button and the IO symbol perform the enlarging animation effects. For example, the circular button and the IO symbol perform animation effects of restoring the sizes from 94% to 100%, and animation duration is 50 ms.

In another optional implementation, after the circular button and the IO symbol rebound to the left end of the sliding area of the background track, the circular button and the IO symbol perform the enlarging animation effects. For example, the circular button and the IO symbol perform animation effects of restoring the sizes from 94% to 100%, and animation duration is 50 ms.

For example, a key frame curve used in enlarging animations of the circular button and the IO symbol may be a Bézier curve, such as a native sharp curve of an Android system.

At this point, the display state of the switch control is switched from ON to OFF.

In this scenario, the user may control the switch control by the tap operation. The reduction animation effects of the circular button and the IO symbol of the switch control are triggered by a press or touch operation of the user, and a display state switching animation effect of the switch control is triggered by a release operation of the user triggers. The display state switching animation effect includes the moving animation effects of the circular button and the IO symbol, the shape changing animation effect of the IO symbol, the color changing animation effects of the background track and the IO symbol, the rebound animation effects of the circular button and the IO symbol, and the enlarging animation effects of the circular button and the IO symbol.

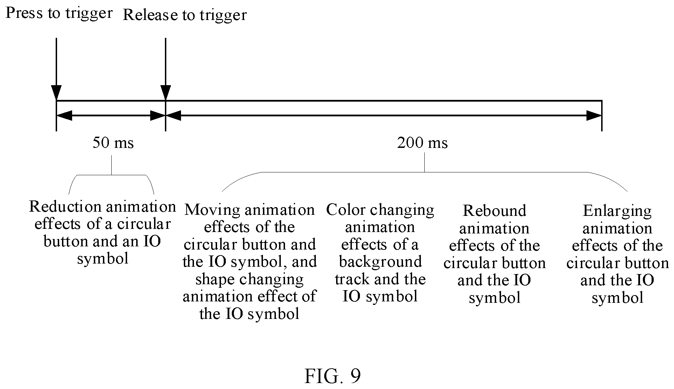

For example, as shown in FIG. 9, when the display state switching of the switch control is triggered by the tap operation of the user, duration of the reduction animation effects of the circular button and the IO symbol is 50 ms, and total duration of the moving animation effects of the circular button and the IO symbol, the shape changing animation effect of the IO symbol, the color changing animation effects of the background track and the IO symbol, the rebound animation effects of the circular button and the IO symbol, and the enlarging animation effects of the circular button and the IO symbol is 200 ms.

Scenario 2

In this scenario, an example in which a user operation is a slide operation is used to describe the switch control display method.

(1) When the switch control is in the OFF state, the user presses and slides the switch control, or the user touches and slides the switch control, and in response to the operation performed by the user on the switch control, a display state of the switch control switches from OFF to ON.

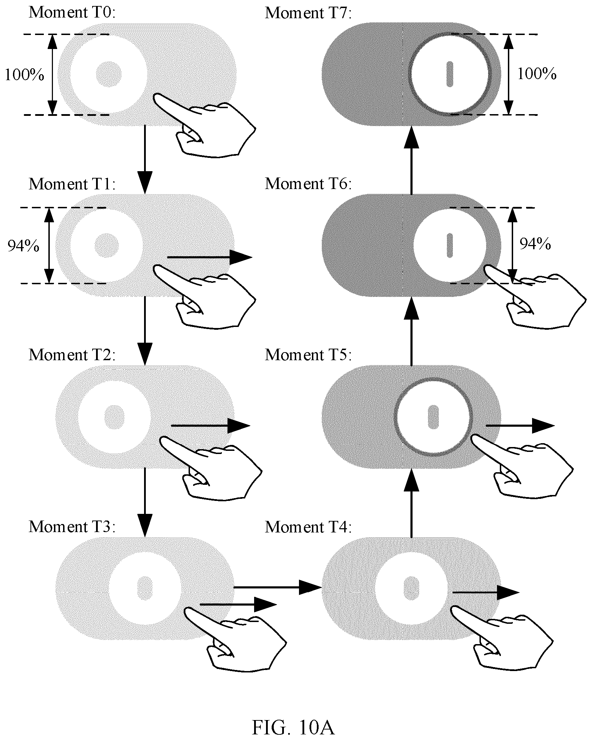

In one case, the user presses and slides the switch control, or the user touches and slides the switch control, and releases the switch control when a circular button slides to a right end of a sliding area of a background track. For a change process of the switch control, refer to FIG. 10A.

As shown in FIG. 10A, at a moment T0, the switch control is in the OFF state. At this time, the circular button is located at a left end of the sliding area of the background track. When the user presses and slides or touches and slides the switch control, the user may press or touch and slide in any area of the switch control, and the switch control performs a switching process from the OFF state to the ON state. Animation effects shown when the switch control performs the switching process from the OFF state to the ON state include but are not limited to: reduction animation effects of the circular button and an IO symbol, moving animation effects of the circular button and the IO symbol, a shape changing animation effect of the IO symbol, color changing animation effects of the background track and the IO symbol, and enlarging animation effects of the circular button and the IO symbol. It should be noted that some of the foregoing animation effects may occur at the same time.

Refer to FIG. 10A. When a finger of the user presses or touches the switch control, the circular button and the IO symbol perform the reduction animation effects. For example, the circular button and the IO symbol perform animation effects of reducing sizes from 100% to 94%. For the switch control with the reduced circular button and the IO symbol, refer to the switch control at a moment T1. For example, a key frame curve used in reduction animations of the circular button and the IO symbol may be a Bézier curve, such as a native sharp curve of an Android system. In this scenario, duration of the circular button and the IO symbol performing the animations of reducing the sizes from 100% to 94% may be 50 ms. In this case, provided that the user keeps the finger in a pressing or touching state and does not slide the finger, the switch control always remains as a display form of the switch control at the moment T1.

Still refer to FIG. 10A. When the finger of the user slides rightward, the moving animation effects of the circular button and the IO symbol and the shape changing animation effect of the IO symbol are triggered. The moving animation effects of the circular button and the IO symbol and the shape changing animation effect of the IO symbol are related to a finger slide operation, that is, the moving animation effects of the circular button and the IO symbol and the shape changing animation effect of the IO symbol show a finger-following state. It may be understood that moving positions of the circular button and the IO symbol and a decrease in a width of the IO symbol are related to a sliding amplitude of the finger.

Refer to the switch control at a moment T2 in FIG. 10A. As the finger of the user slides, the circular button and the IO symbol move rightward along a horizontal centerline of the background track, and a shape of the IO symbol changes as the IO symbol moves. The width of the IO symbol gradually decreases, a height remains unchanged, and a rounded corner of the IO symbol is always half the width.

Still refer to FIG. 10A. As the finger of the user slides, at a moment T3, the circular button and the IO symbol move to a midpoint of the sliding area of the background track, that is, to a midpoint of the background track in a horizontal direction. Compared with the moment T2, positions of the circular button and the IO symbol in the background track are further to the right, and the width of the IO symbol is smaller.

It should be noted that during movement of the circular button and the IO symbol and shape changing of the IO symbol, a center point of the IO symbol always coincides with a center point of the circular button. The width of the IO symbol is proportional to an offset of the circular button in the sliding area of the background track.

With reference to FIG. 10A and FIG. 7B, from the moment T0 to a moment T7, as the circular button gradually moves rightward in the background track as the finger slides, the offset of the circular button in the background track gradually increases, and the width of the IO symbol gradually decreases. At the moment T0, the switch control is in the OFF state, the offset of the circular button in the background track is 0, and the width of the IO symbol is 6 dp. At the moment T3 and a moment T4, the offset of the circular button in the background track is 9, and the width of the IO symbol is 3.75 dp. At the moment T7, the switch control is in the ON state, the offset of the circular button in the background track is 18, and the width of the IO symbol is 1.5 dp.

It should be noted that a mapping relationship between the width w of the IO symbol and the offset d of the circular button in the sliding area of the background track as shown in FIG. 7B does not take the reduction animation effect of the IO symbol into consideration. If the reduction animation effect of the IO symbol is taken into consideration, the width of the IO symbol is multiplied by a corresponding reduction ratio. Details are not described herein again.

Still refer to FIG. 10A. As the finger of the user slides, at the moment T3, the circular button and the IO symbol move to the midpoint of the sliding area of the background track, that is, to the midpoint of the background track in the horizontal direction, and the color changing animation effects of the background track and the IO symbol are triggered. Still refer to FIG. 10A. At the moment T4, colors of the background track and the IO symbol begin to change. For example, when the switch state is OFF, the colors of the background track and the IO symbol are #E5E5E5. When the switch state is ON, the colors of the background track and the IO symbol are #256FFF (or a tone when a control is activated in an Android system). Still refer to FIG. 10A. At the moment T7, the switch state is ON, and the color changing animation effects of the background track and the IO symbol are shown between the moment T4 and the moment T7. For example, the color #E5E5E5 gradually changes to the color #256FFF. For example, a key frame curve used in color changing animations of the background track and the IO symbol may be a fastOutSlowIn (fast out and slow in) curve, such as a native standard curve of Android.

It should be noted that the color of the background track and the color of the IO symbol are always the same. In addition, a time difference between the moment T4 and the moment T3 is extremely small and related to response duration of color drawing. The user cannot perceive the time difference by naked eyes.

In an optional implementation, the color changing animation effects of the background track and the IO symbol may alternatively be replaced with color and transparency changing animation effects of the background track and the IO symbol. This is not limited in this embodiment. Similarly, at the moment T3, the circular button and the IO symbol move to the midpoint of the sliding area of the background track, that is, to the midpoint of the background track in the horizontal direction, and the color and transparency changing animation effects of the background track and the IO symbol are triggered. Still refer to FIG. 10A. At the moment T4, the colors and transparency of the background track and the IO symbol begin to change. For example, when the switch state is OFF, the colors of the background track and the IO symbol are #E5E5E5, and the transparency is 10%. When the switch state is ON, the colors of the background track and the IO symbol are #256FFF (or a tone when a control is activated in an Android system), and the transparency is 100%. Still refer to FIG. 10A. At the moment T7, the switch state is ON, and the color and transparency changing animation effects of the background track and the IO symbol are shown between the moment T4 and the moment T7. For example, the color #E5E5E5 gradually changes to the color #256FFF, and the transparency 10% gradually changes to the transparency 100%. For example, a key frame curve used in color and transparency changing animations of the background track and the IO symbol may be a fastOutSlowIn (fast out and slow in) curve, such as a native standard curve of an Android system.

Still refer to FIG. 10A. As the finger of the user slides, at a moment T5, the circular button continues to move rightward in the sliding area of the background track and moves to the right end of the sliding area of the background track. Refer to the switch control at a moment T6. At the moment T6, the circular button and the IO symbol are in a reduction state.

Still refer to FIG. 10A. When the finger of the user releases the switch control, the enlarging animation effects of the circular button and the IO symbol are triggered. At the moment T7, the sizes of the circular button and the IO symbol in the switch control are restored to the sizes before reduction. For example, the circular button and the IO symbol perform animation effects of restoring the sizes from 94% to 100%, and animation duration is 50 ms. For example, a key frame curve used in enlarging animations of the circular button and the IO symbol may be a Bézier curve, such as a native sharp curve of an Android system.

At this point, the display state of the switch control is switched from OFF to ON.

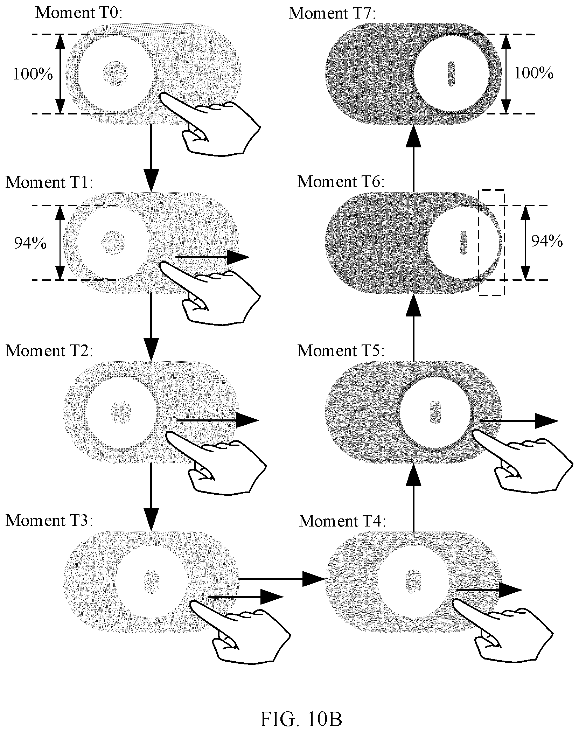

In another case, the user presses and slides the switch control, or the user touches and slides the switch control, and releases the switch control when the circular button does not slide to the right end of the sliding area of the background track. For a change process of the switch control, refer to FIG. 10B. It should be noted that a difference between this case and the foregoing case lies in that timing at which the user releases the switch control.

Refer to FIG. 10B. As the finger of the user slides, at a moment T5, the circular button continues to move rightward in the sliding area of the background track. Assuming that the finger of the user releases the switch control after the moment T5, because the circular button does not slide to the right end of the sliding area of the background track at this time, the moving animation effects of the circular button and the IO symbol and the shape changing animation effect of the IO symbol are triggered.

It should be noted that before the user releases the switch control, the moving animation effects of the circular button and the IO symbol and the shape changing animation effect of the IO symbol both show a finger-following change. After the user releases the switch control, a key frame curve used in moving animations of the circular button and the IO symbol may be an elastic curve. The mathematical principle of the elastic curve is damped oscillation. In this embodiment, the elastic curve used as the key frame curve in the moving animations of the circular button and the IO symbol corresponds to overdamped oscillation. A damping coefficient $\gamma$ is set to 24, a spring stiffness coefficient $k$ is set to 300, and mass $m$ of an object is 1 in default. Because the elastic curve used as the key frame curve in the moving animations of the circular button and the IO symbol corresponds to the overdamped oscillation, as the circular button moves in the background track, the circular button moves to a right boundary of the background track and then rebounds. To be specific, the circular button touches a right boundary of the background track and then moves in an opposite direction, to show rebound animation effects of the circular button and the IO symbol. An elastic curve used as a key frame curve in rebound animations may also correspond to the foregoing overdamped oscillation.

Still refer to FIG. 10B. After the user releases the switch control, the circular button continues to move rightward in the sliding area of the background track. When moving to the right end of the sliding area of the background track, the circular button does not stop moving, but continues to move rightward until reaches the right boundary of the background track. Refer to a dashed line box in the schematic diagram of the switch control at a moment T6. At this time, the circular button touches the boundary and rebounds, and moves leftward in the background track back to the right end of the sliding area of the background track. Refer to the schematic diagram of the switch control at a moment T7. The circular button moving to the right boundary of the background track may be understood as that a right boundary of the circular button is tangent to the right boundary of the background track, or may be understood as that a right boundary of an outline of the circular button is tangent to the right boundary of the background track. This is not limited in this embodiment.

In an optional implementation, after the circular button moves to the right end of the sliding area of the background track, in a process that the circular button continues to move rightward to the right boundary of the background track and in a process that the circular button touches the boundary and rebounds, the width of the IO symbol no longer changes.

In another optional implementation, after the circular button moves to the right end of the sliding area of the background track, in a process that the circular button continues to move rightward to the right boundary of the background track and in a process that the circular button touches the boundary and rebounds, the width of the IO symbol still changes. After the circular button moves to the right end of the sliding area of the background track, in the process that the circular button continues to move rightward to the right boundary of the background track and in the process that the circular button touches the boundary and rebounds, the width of the IO symbol first decreases and then increases.

Still refer to FIG. 10B. At the moment T7, the sizes of the circular button and the IO symbol in the switch control are restored to the sizes before reduction.

In a possible implementation, in a process that the circular button and the IO symbol rebound, the circular button and the IO symbol perform the enlarging animation effects. For example, the circular button and the IO symbol perform animation effects of restoring the sizes from 94% to 100%, and animation duration is 50 ms.

In another optional implementation, after the circular button and the IO symbol rebound to the right end of the sliding area of the background track, the circular button and the IO symbol perform the enlarging animation effects. For example, the circular button and the IO symbol perform animation effects of restoring the sizes from 94% to 100%, and animation duration is 50 ms.

For example, a key frame curve used in enlarging animations of the circular button and the IO symbol may be a Bézier curve, such as a native sharp curve of an Android system.

At this point, the display state of the switch control is switched from OFF to ON.

(2) When the switch control is in the ON state, the user presses and slides the switch control, or the user touches and slides the switch control, and in response to the operation performed by the user on the switch control, a display state of the switch control switches from ON to OFF.

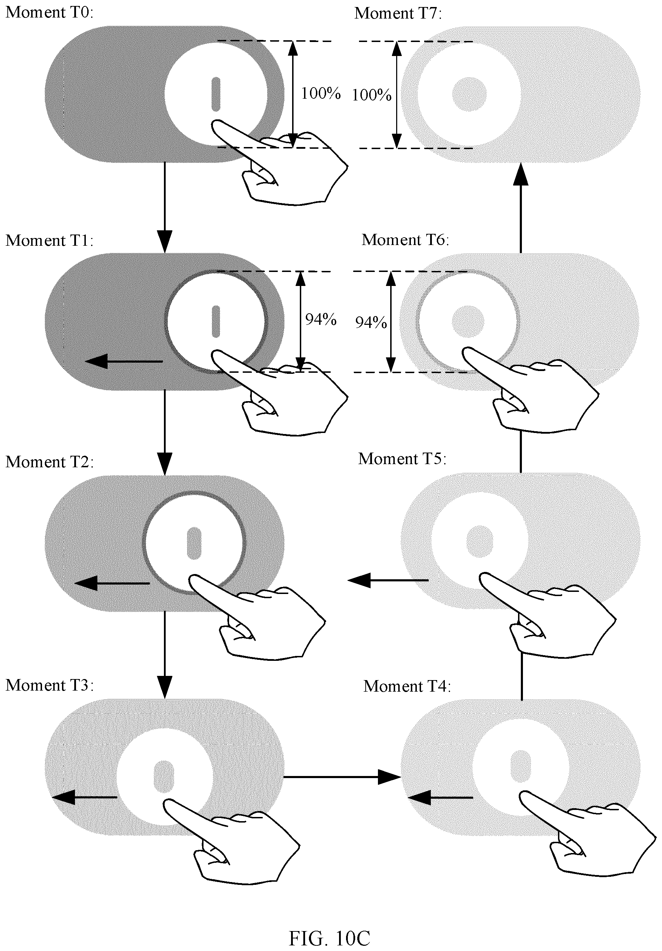

In one case, the user presses and slides the switch control, or the user touches and slides the switch control, and releases the switch control when a circular button slides to a left end of a sliding area of a background track. For a change process of the switch control, refer to FIG. 10C.

As shown in FIG. 10C, at a moment T0, the switch control is in the OFF state. At this time, the circular button is located at a right end of the sliding area of the background track. When the user presses and slides or touches and slides the switch control, the user may press and slide or touch and slide in any area of the switch control, and the switch control performs a switching process from the OFF state to the ON state. Animation effects shown when the switch control performs the switching process from the OFF state to the ON state include but are not limited to: reduction animation effects of the circular button and an IO symbol, moving animation effects of the circular button and the IO symbol, a shape changing animation effect of the IO symbol, color changing animation effects of the background track and the IO symbol, and enlarging animation effects of the circular button and the IO symbol. It should be noted that some of the foregoing animation effects may occur at the same time.

Refer to FIG. 10C. When a finger of the user presses or touches the switch control, the circular button and the IO symbol perform the reduction animation effects. For example, the circular button and the IO symbol perform animation effects of reducing sizes from 100% to 94%. For the switch control with the reduced circular button and the IO symbol, refer to the switch control at a moment T1. For example, a key frame curve used in reduction animations of the circular button and the IO symbol may be a Bézier curve, such as a native sharp curve of an Android system. In this scenario, duration of the circular button and the IO symbol performing the animations of reducing the sizes from 100% to 94% may be 50 ms. In this case, provided that the user keeps the finger in a pressing or touching state and does not slide the finger, the switch control always remains as a display form of the switch control at the moment T1.

Still refer to FIG. 10C. When the finger of the user slides leftward, the moving animation effects of the circular button and the IO symbol and the shape changing animation effect of the IO symbol are triggered. The moving animation effects of the circular button and the IO symbol and the shape changing animation effect of the IO symbol are related to a finger slide operation, that is, the moving animation effects of the circular button and the IO symbol and the shape changing animation effect of the IO symbol show a finger-following state. It may be understood that moving positions of the circular button and the IO symbol and an increase in a width of the IO symbol are related to a sliding amplitude of the finger.

Refer to the switch control at a moment T2 in FIG. 10C. As the finger of the user slides, the circular button and the IO symbol move leftward along a horizontal centerline of the background track, and a shape of the IO symbol changes as the IO symbol moves. The width of the IO symbol gradually increases, a height remains unchanged, and a rounded corner of the IO symbol is always half the width.

Still refer to FIG. 10C. As the finger of the user slides, at a moment T3, the circular button and the IO symbol move to a midpoint of the sliding area of the background track, that is, to a midpoint of the background track in a horizontal direction. Compared with the moment T2, positions of the circular button and the IO symbol in the background track are further to the left, and the width of the IO symbol is larger.

It should be noted that during movement of the circular button and the IO symbol and shape changing of the IO symbol, a center point of the IO symbol always coincides with a center point of the circular button. The width of the IO symbol is proportional to an offset of the circular button in the sliding area of the background track.

With reference to FIG. 10C and FIG. 7B, from moment T0 to a moment T7, as the circular button gradually moves leftward in the background track as the finger slides, the offset of the circular button in the background track gradually decreases, and the width of the IO symbol gradually increases. At the moment T0, the switch control is in the ON state, the offset of the circular button in the background track is 18, and the width of the IO symbol is 1.5 dp. At the moment T3 and a moment T4, the offset of the circular button in the background track is 9, and the width of the IO symbol is 3.75 dp. At the moment T7, the switch control is in the OFF state, the offset of the circular button in the background track is 0, and the width of the IO symbol is 6 dp.

It should be noted that a mapping relationship between the width w of the IO symbol and the offset d of the circular button in the sliding area of the background track as shown in FIG. 7B does not take the reduction animation effect of the IO symbol into consideration. If the reduction animation effect of the IO symbol is taken into consideration, the width of the IO symbol is multiplied by a corresponding reduction ratio. Details are not described herein again.

Still refer to FIG. 10C. As the finger of the user slides, at the moment T3, the circular button and the IO symbol move to the midpoint of the sliding area of the background track, that is, to the midpoint of the background track in the horizontal direction, and the color changing animation effects of the background track and the IO symbol are triggered. Still refer to FIG. 10A. At the moment T4, colors of the background track and the IO symbol begin to change. For example, when the switch state is ON, the colors of the background track and the IO symbol are #256FFF (or a tone when a control is activated in an Android system). When the switch state is OFF, the colors of the background track and the IO symbol are #E5E5E5. Still refer to FIG. 10C. At the moment T7, the switch state is OFF, and the color changing animation effects of the background track and the IO symbol are shown between the moment T4 and the moment T7. For example, the color #256FFF gradually changes to the color #E5E5E5. For example, a key frame curve used in color changing animations of the background track and the IO symbol may be a fastOutSlowIn (fast out and slow in) curve, such as a native standard curve of Android.

It should be noted that the color of the background track and the color of the IO symbol are always the same. In addition, a time difference between the moment T4 and the moment T3 is extremely small and related to response duration of color drawing. The user cannot perceive the time difference by naked eyes.

In an optional implementation, the color changing animation effects of the background track and the IO symbol may alternatively be replaced with color and transparency changing animation effects of the background track and the IO symbol. This is not limited in this embodiment. Similarly, at the moment T3, the circular button and the IO symbol move to the midpoint of the sliding area of the background track, that is, to the midpoint of the background track in the horizontal direction, and the color and transparency changing animation effects of the background track and the IO symbol are triggered. Still refer to FIG. 10C. At the moment T4, the colors and transparency of the background track and the IO symbol begin to change. For example, when the switch state is ON, the colors of the background track and the IO symbol are #256FFF (or a tone when a control is activated in an Android system), and the transparency is 100%. When the switch state is OFF, the colors of the background track and the IO symbol are #E5E5E5, and the transparency is 10%. Still refer to FIG. 10A. At the moment T7, the switch state is OFF, and the color and transparency changing animation effects of the background track and the IO symbol are shown between moment T4 and moment T7. For example, the color #256FFF gradually changes to the color #E5E5E5, and the transparency 100% gradually changes to the transparency 10%. For example, a key frame curve used in color and transparency changing animations of the background track and the IO symbol may be a fastOutSlowIn (fast out and slow in) curve, such as a native standard curve of an Android system.

Still refer to FIG. 10C. As the finger of the user slides, at a moment T5, the circular button continues to move leftward in the sliding area of the background track and moves to the left end of the sliding area of the background track. Refer to the switch control at a moment T6. At the moment T6, the circular button and the IO symbol are in a reduction state.

Still refer to FIG. 10C. When the finger of the user releases the switch control, the enlarging animation effects of the circular button and the IO symbol are triggered. At the moment T7, the sizes of the circular button and the IO symbol in the switch control are restored to the sizes before reduction. For example, the circular button and the IO symbol perform animation effects of restoring the sizes from 94% to 100%, and animation duration is 50 ms. For example, a key frame curve used in enlarging animations of the circular button and the IO symbol may be a Bézier curve, such as a native sharp curve of an Android system.

At this point, the display state of the switch control is switched from ON to OFF.

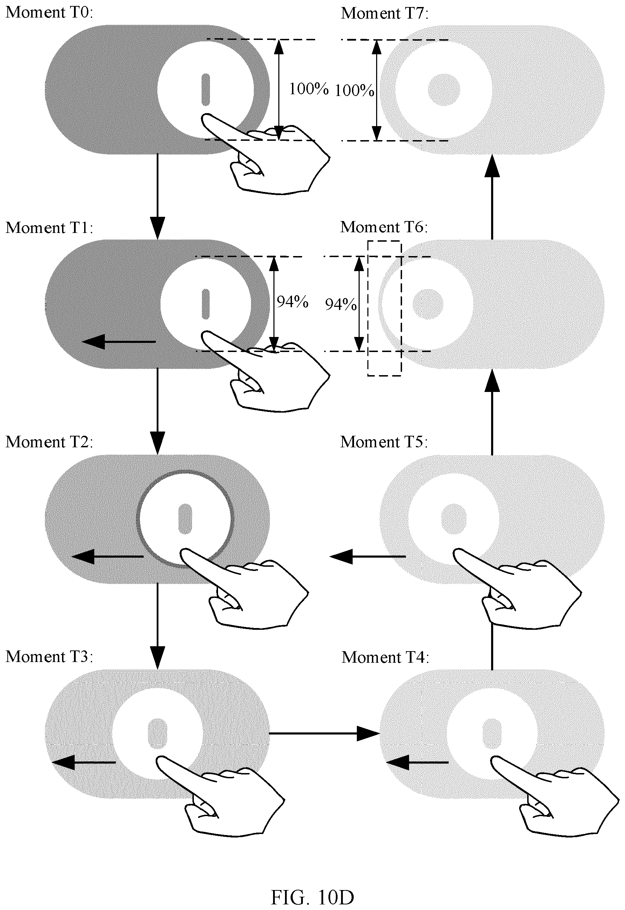

In another case, the user presses and slides the switch control, or the user touches and slides the switch control, and releases the switch control when the circular button does not slide to the left end of the sliding area of the background track. For a change process of the switch control, refer to FIG. 10D. It should be noted that a difference between this case and the foregoing case lies in that timing at which the user releases the switch control.

It should be noted that before the user releases the switch control, the moving animation effects of the circular button and the IO symbol and the shape changing animation effect of the IO symbol both show a finger-following change. After the user releases the switch control, a key frame curve used in moving animations of the circular button and the IO symbol may be an elastic curve. The mathematical principle of the elastic curve is damped oscillation. In this embodiment, the elastic curve used as the key frame curve in the moving animations of the circular button and the IO symbol corresponds to overdamped oscillation. A damping coefficient $\gamma$ is set to 24, a spring stiffness coefficient $k$ is set to 300, and mass $m$ of an object is 1 in default. Because the elastic curve used as the key frame curve in the moving animations of the circular button and the IO symbol corresponds to the overdamped oscillation, as the circular button moves in the background track, the circular button moves to a left boundary of the background track and then rebounds. To be specific, the circular button touches a left boundary of the background track and then moves in an opposite direction, to show rebound animation effects of the circular button and the IO symbol. An elastic curve used as a key frame curve in rebound animations may also correspond to the foregoing overdamped oscillation.

Still refer to FIG. 10D. After the user releases the switch control, the circular button continues to move leftward in the sliding area of the background track. When moving to the left end of the sliding area of the background track, the circular button does not stop moving, but continues to move leftward until reaches the left boundary of the background track. Refer to the dashed line box in the schematic diagram of the switch control at a moment T6. At this time, the circular button touches the boundary and rebounds, and moves rightward in the background track back to the left end of the sliding area of the background track. Refer to the schematic diagram of the switch control at a moment T7. The circular button moving to the left boundary of the background track may be understood as that a left boundary of the circular button is tangent to the left boundary of the background track, or may be understood that a left boundary of an outline of the circular button is tangent to the left boundary of the background track. This is not limited in this embodiment.

In an optional implementation, after the circular button moves to the left end of the sliding area of the background track, in a process that the circular button continues to move leftward to the left boundary of the background track and a in a process that the circular button touches the boundary and rebounds, the width of the IO symbol no longer changes.

In another optional implementation, after the circular button moves to the left end of the sliding area of the background track, in a process that the circular button continues to move leftward to the left boundary of the background track and in a process that the circular button touches the boundary and rebounds, the width of the IO symbol still changes. After the circular button moves to the left end of the sliding area of the background track, in the process that the circular button continues to move leftward to the left boundary of the background track and in the process that the circular button touches the boundary and rebounds, the width of the IO symbol first increases and then decreases.

Still refer to FIG. 10D. At the moment T7, the sizes of the circular button and the IO symbol in the switch control are restored to the sizes before reduction.

In a possible implementation, in a process that the circular button and the IO symbol rebound, the circular button and the IO symbol perform the enlarging animation effects. For example, the circular button and the IO symbol perform animation effects of restoring the sizes from 94% to 100%, and animation duration is 50 ms.

In another optional implementation, after the circular button and the IO symbol rebound to the left end of the sliding area of the background track, the circular button and the IO symbol perform the enlarging animation effects. For example, the circular button and the IO symbol perform animation effects of restoring the sizes from 94% to 100%, and animation duration is 50 ms.

For example, a key frame curve used in enlarging animations of the circular button and the IO symbol may be a Bézier curve, such as a native sharp curve of an Android system.

At this point, the display state of the switch control is switched from ON to OFF.

(3) When the switch control is in the ON state or the OFF state, the user presses and slides the switch control back and forth, or the user touches and slides the switch control back and forth, and in response to the user operation on the switch control, a display state of the switch control switches or does not switch. At this time, the display state of the switch control is related to a final position of a circular button in a sliding area of a background track. After the user operation, if the circular button is located at a left end of the sliding area of the background track, the switch control is in the OFF state; if the circular button is located at a right end of the sliding area of the background track, the switch control is in the ON state.

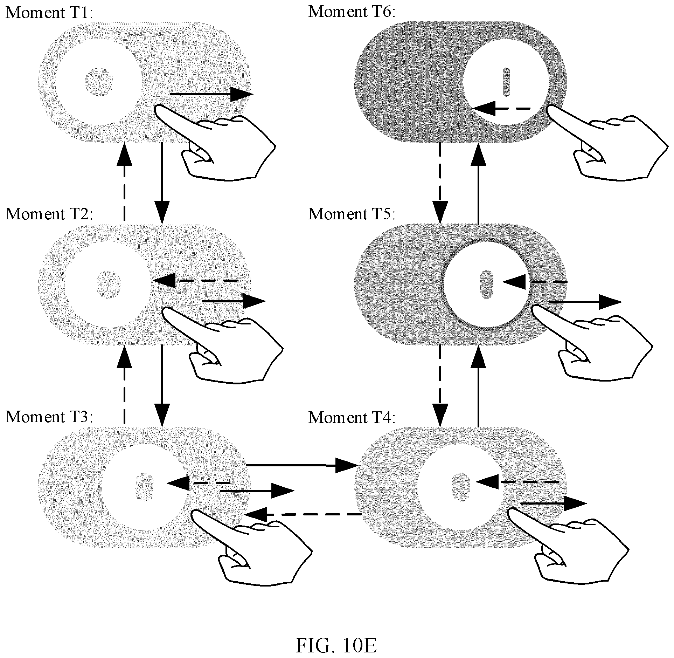

Refer to FIG. 10E. At a moment T1, the circular button and an IO symbol are in a reduction state and are located at the left end of the sliding area of the background track. At this time, a finger of the user may slide rightward to adjust the display state of the switch control.

Still refer to FIG. 10E. At a moment T6, the circular button and the IO symbol are in the reduction state and are located at the right end of the sliding area of the background track. At this time, the finger of the user may slide leftward to adjust the display state of the switch control.

Refer to FIG. 10E. At a moment T2 to a moment T5, the circular button and the IO symbol are in the reduction state and are neither located at the left end of the sliding area of the background track, nor located at the right end of the sliding area of the background track. At this time, the finger of the user may slide leftward or rightward to adjust the display state of the switch control.

If the user releases the switch control when the circular button slides to the right end of the sliding area of the background track, enlarging animation effects of the circular button and the IO symbol are triggered, and sizes of the circular button and the IO symbol in the switch control are restored to the sizes before reduction. In this case, the display state of the switch control is ON.

If the user releases the switch control when the circular button slides to the left end of the sliding area of the background track, the enlarging animation effects of the circular button and the IO symbol are triggered, and the sizes of the circular button and the IO symbol in the switch control are restored to the sizes before reduction. In this case, the display state of the switch control is OFF.

If the user does not release the switch control when the circular button slides to the left end or the right end of the sliding area of the background track, when the circular button is located in a right half part of the sliding area of the background track, the circular button and the IO symbol continue to move rightward in the sliding area of the background track. When moving to the right end of the sliding area of the background track, the circular button does not stop moving, but continues to move rightward until reaches a right boundary of the background track, touches the boundary and rebounds, and moves leftward in the background track back to the right end of the sliding area of the background track. In addition, in a process of rebounding, or after rebounding to the right end of the sliding area of the background track, the circular button and the IO symbol perform the enlarging animation effects, and the sizes are restored to the sizes before reduction. In this case, the display state of the switch control is ON.

If the user does not release the switch control when the circular button slides to the left end or the right end of the sliding area of the background track, when the circular button is located in a left half part of the sliding area of the background track, the circular button and the IO symbol continue to move leftward in the sliding area of the background track. When moving to the left end of the sliding area of the background track, the circular button does not stop moving, but continues to move leftward until reaches the left boundary of the background track, touches the boundary and rebounds, and moves rightward in the background track back to the left end of the sliding area of the background track. In addition, in a process of rebounding, or after rebounding to the left end of the sliding area of the background track, the circular button and the IO symbol perform the enlarging animation effects, and the sizes are restored to the sizes before reduction. In this case, the display state of the switch control is OFF.

In this scenario, the user may control the switch control by a press and slide operation or a touch and slide operation. The reduction animation effects of the circular button and the IO symbol, the moving animation effects of the circular button and the IO symbol, the shape changing animation effect of the IO symbol, the color changing animation effects of the background track and the IO symbol, the rebound animation effects of the circular button and the IO symbol, and the enlarging animation effects of the circular button and the IO symbol of the switch control are triggered by the user operation. For example, duration of the reduction animation effects of the circular button and the IO symbol and the enlarging animation effects of the circular button and the IO symbol may be 50 ms, and duration of another animation effect is related to duration of the user operation.

Scenario 3

In this scenario, reduction animation effects of a circular button and an IO symbol of the switch control are triggered by a press or touch operation of the user. If duration of the press or touch operation of the user reaches preset duration, enlarging animation effects of the circular button and the IO symbol of the switch control may be directly triggered by a release operation of the user. In this case, a display state of the switch control does not change.

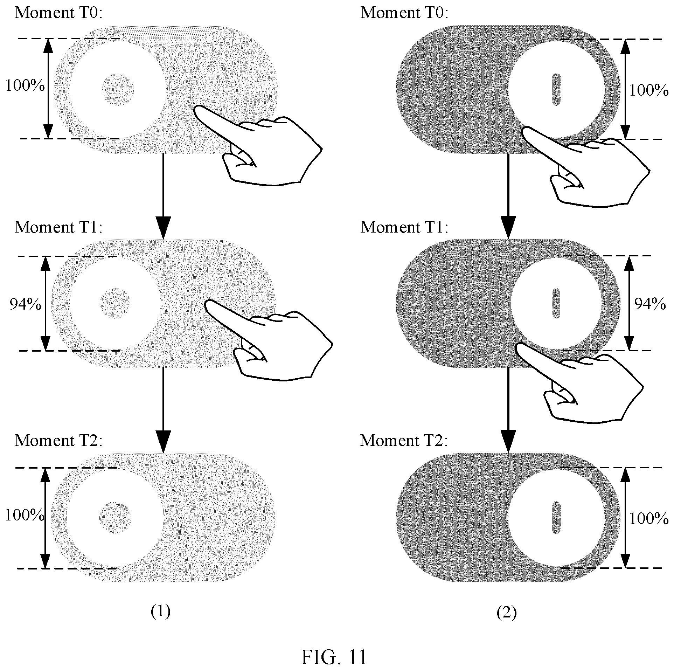

Refer to section (1) of FIG. 11. At a moment T0, the switch control is in the OFF state. The reduction animation effects of the circular button and the IO symbol of the switch control are triggered by the press or touch operation of the user. For example, sizes are reduced from 100% to 94%. Refer to the schematic diagram of the switch control at a moment T1. If the user releases the switch control when the duration of the press or touch operation of the user reaches the preset duration, the enlarging animation effects of the circular button and the IO symbol of the switch control are triggered by the release operation of the user. For example, the sizes are enlarged from 94% to 100%. Refer to the schematic diagram of the switch control at a moment T2.

Refer to section (2) of FIG. 11. At a moment T0, the switch control is in the ON state. The reduction animation effects of the circular button and the IO symbol of the switch control are triggered by the press or touch operation of the user. For example, the sizes are reduced from 100% to 94%. Refer to the schematic diagram of the switch control at a moment T1. If the user releases the switch control when the duration of the press or touch operation of the user reaches the preset duration, the enlarging animation effects of the circular button and the IO symbol of the switch control are triggered by the release operation of the user. For example, the sizes are enlarged from 94% to 100%. Refer to the schematic diagram of the switch control at a moment T2.

Duration of the reduction animation effects of the circular button and the IO symbol and the enlarging animation effects of the circular button and the IO symbol may be 50 ms. For example, key frame curves used in reduction animations of the circular button and the IO symbol and enlarging animations of the circular button and the IO symbol may be a Bézier curve, such as a native sharp curve of an Android system.

In a specific implementation, a size of a hot zone of the switch control is larger than a size of a background track area. For example, a hot zone area of the switch control not only includes the background track area, but also includes or partially includes a text description area corresponding to the switch control. In this case, the user may perform a control operation on the switch control at any position in the hot zone of the switch control.

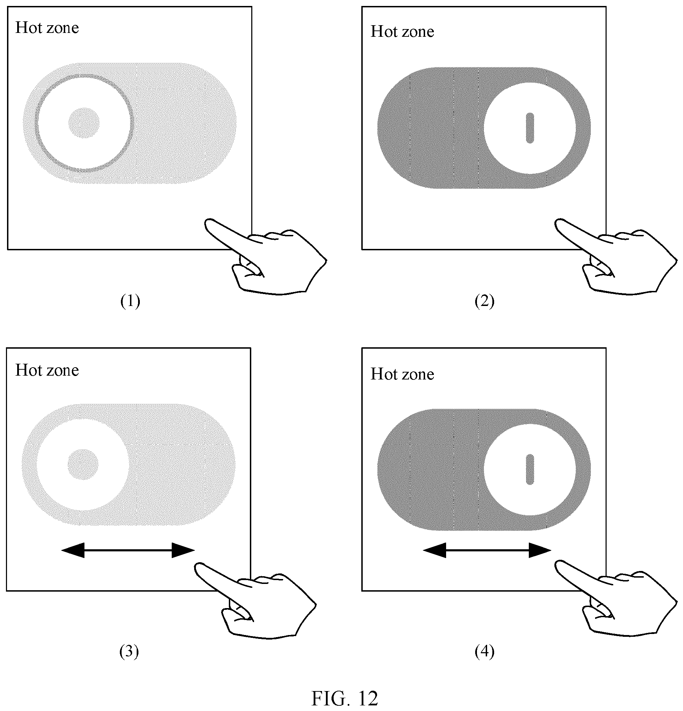

As shown in FIG. 12, when the user performs a tap operation, a press and slide operation, or a touch and slide operation on any position in the hot zone of the switch control, the switch control can be controlled. In this way, it is more convenient for the user to operate, and this is especially suitable for a user with an inaccurate operation, so that user experience can be improved.

For relevant description of the user controlling the switch control based on the tap operation, the press and slide operation, or the touch and slide operation, refer to the foregoing description. Details are not described herein again.

To implement the foregoing switch control display method in a terminal, an arr package may be developed in advance based on UIkit (a lightweight and modular front-end framework). The arr package is used for implementing the foregoing switch control. An application invokes the arr package during compiling, and after the application is installed, the foregoing switch control may be displayed in an interface of the application. In this embodiment, a function module corresponding to the arr package is temporarily referred to as a switch control module.

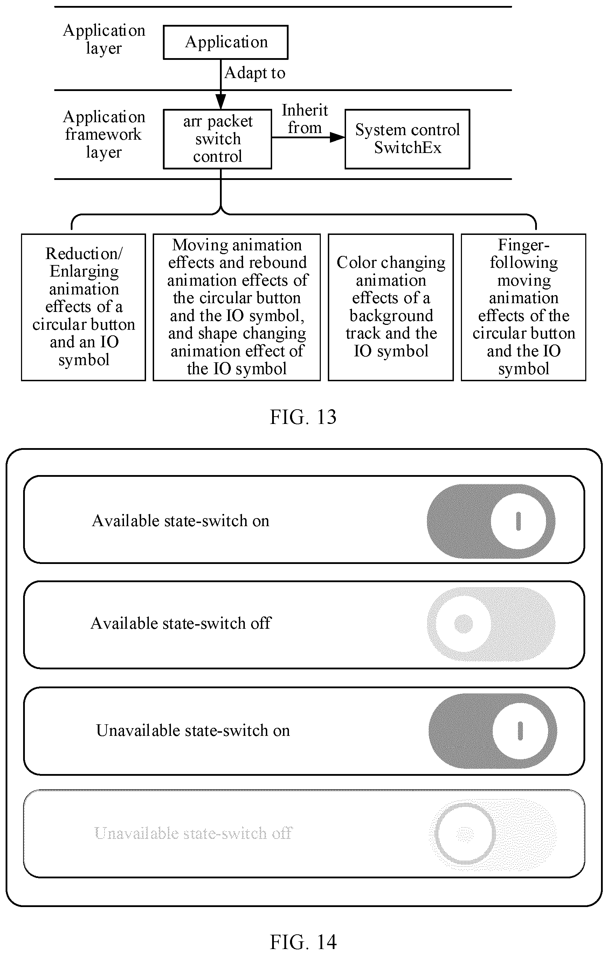

Refer to FIG. 13, a switch control module provides an adaptation interface to an application and inherits from a system control (SwitchEx), so that the foregoing reduction/enlarging animation effects of a circular button and an IO symbol, the moving animation effects and the rebound animation effects of the circular button and the IO symbol, the shape changing animation effect of the IO symbol, the color changing animation effects of a background track and the IO symbol, and the finger-following moving animation effects of the circular button and the IO symbol can be implemented.

The switch control module provides the application with adaptation interfaces corresponding to a plurality of display modes to show display effects corresponding to different display modes.

For example, as shown in FIG. 14, the switch control module may provide adaptation interfaces respectively corresponding to a "switch available state" and a "switch unavailable state" to show display effects corresponding to the "switch available state" and the "switch unavailable state" respectively.

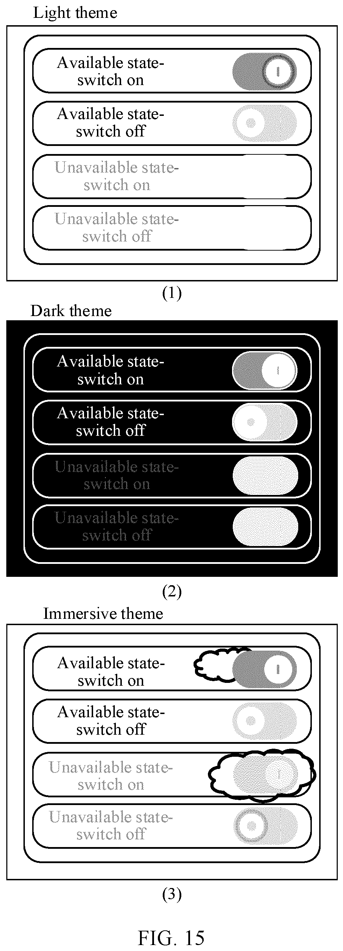

For example, as shown in FIG. 15, the switch control module may further provide adaptation interfaces respectively corresponding to different theme scenarios (such as a light theme, a dark theme, and an immersive theme) to show display effects corresponding to different theme scenarios respectively.

The following uses any Activity as an example to describe a time sequence of performing the animation effects in the switch control module. The Activity is an application component that provides a screen which may be used by a user to interact to complete a task. All operations in the Activity are closely related to the user. The Activity is a component responsible for interacting with the user and may display a specific control by using setContentView. In an Android application, an Activity is usually a separate screen that may display some controls and may monitor, process, and response to a user event.

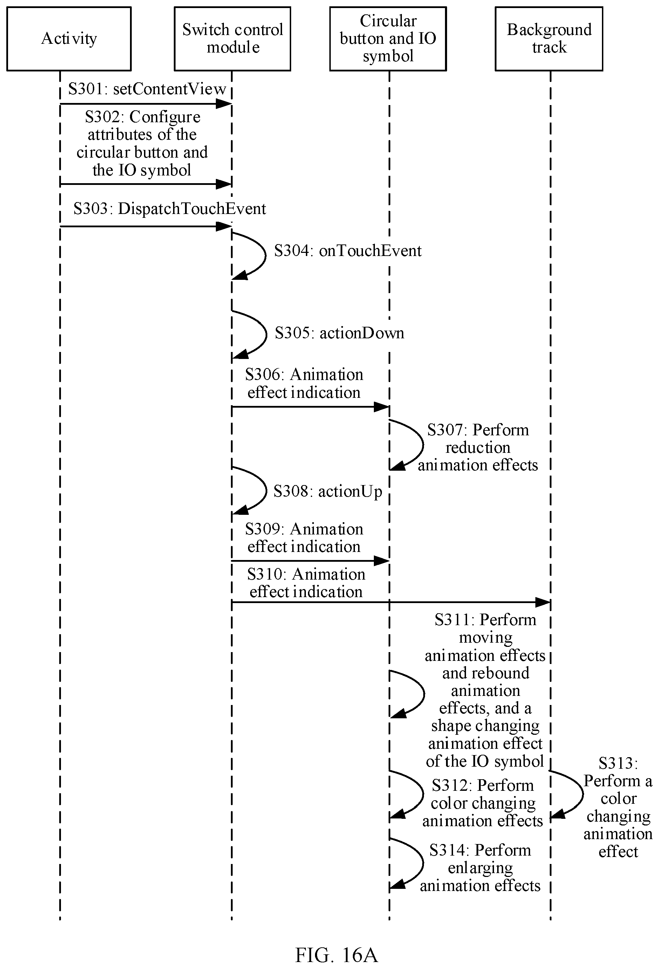

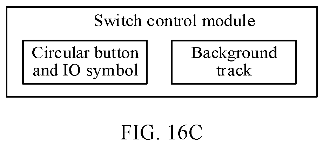

When the user controls a switch control by a tap operation, for a time sequence of performing the animation effects in the switch control module, reference may be made to FIG. 16A. Refer to FIG. 16C. In the sequence diagram, a circular button, an IO symbol, and a background track are each an object in the switch control module, and each implements an animation effect based on a thread.

Refer to FIG. 16A. A process of a switch control display method provided in an embodiment of this application specifically includes:
S301: An Activity sets, by using setContentView, a switch control corresponding to a switch control module in an interface.

A setContentView() method is used for setting a user interface corresponding to the Activity. In this process, the setContentView() method is specifically used for setting an interface of the switch control.

S302: The Activity configures attributes of the circular button and the IO symbol.

The attributes of the circular button and the IO symbol indicate whether a current state of the switch control is ON or OFF. For example, the attributes of the circular button and the IO symbol may include a display position of the circular button and a display form of the IO symbol. For example, the attributes of the circular button and the IO symbol may further include display effects of the switch control, such as a color and transparency.

S303: In response to a user operation, the Activity performs DispatchTouchEvent.

The DispatchTouchEvent processes touch event distribution.

In this embodiment, when the user operates the switch control in the user interface corresponding to the Activity, the Activity distributes touch events to the switch control module.

S304: The switch control module performs onTouchEvent.

The switch control module performs an onTouchEvent() method to capture a user operation event, such as an event of a user finger pressing or touching a screen and an event of a user finger leaving the screen.

S305: The switch control module captures an actionDown event.

S306: The switch control module provides an animation effect indication for the circular button and the IO symbol.

When capturing the actionDown event, the switch control module indicates the circular button and the IO symbol to perform reduction animation effects.

S307: The circular button and the IO symbol perform the reduction animation effects.

The reduction animation effect may be implemented by redrawing.

When the finger presses or touches the switch control on the screen, the actionDown event is captured, and the redrawing of the circular button and the IO symbol is triggered. During the redrawing of the circular button and the IO symbol, bounds (bounds) of the circular button and the IO symbol are reduced to visually implement the reduction animation effects of the circular button and the IO symbol.

S308: The switch control module captures an actionUp event.

S309: The switch control module provides an animation effect indication for the circular button and the IO symbol.

When capturing the actionUp event, the switch control module indicates the circular button and the IO symbol to perform the IO symbol and perform moving animation effects, rebound animation effects, a shape changing animation effect of the IO symbol, and a color changing animation effect of the IO symbol.

Trigger conditions for the circular button and the IO symbol to perform the moving animation effects and the shape changing animation effect of the IO symbol are the actionUp event.

A trigger condition for the circular button and the IO symbol to perform the rebound animation effects are that the circular button moves to a boundary of the background track.

A trigger condition for the color changing animation effect of the IO symbol is that the circular button slides to a midpoint of the background track, or the state of the switch control changes (for example, switches from ON to OFF, or from OFF to ON).

S310: The switch control module provides an animation effect indication for the background track.

When capturing the actionUp event, the switch control module indicates the background track to perform a color changing animation effect. A trigger condition for the background track to perform the color changing animation effect is that the circular button slides to the midpoint of the background track, or the state of the switch control changes (for example, switches from ON to OFF, or from OFF to ON).

A sequence of performing S309 and S310 is not limited in this embodiment.

S311: The circular button and the IO symbol perform the moving animation effects, the rebound animation effects, and the shape changing animation effect of the IO symbol.

When the finger releases the switch control on the screen, the actionUp event is captured, and the redrawing of the circular button and the IO symbol is triggered. According to a position of a center point of the circular button in the background track, a rounded rectangle is drawn as the IO symbol. As a position of the circular button changes, bounds of the rounded rectangle are redrawn for a plurality of times, a width of the rounded rectangle gradually changes, and a shape of the IO symbol gradually changes from an "O" shape to an "I" shape, or gradually changes from an "I" shape to an "O" shape.

S312: The circular button and the IO symbol perform the color changing animation effect of the IO symbol.

S313: The background track performs the color changing animation effect.

In an implementation, a state_checked value of the switch control indicates whether the state of the switch control changes. For example, when the state_checked of the switch control is TRUE, the state of the switch control changes. When the state_checked of the switch control is FALSE, the state of the switch control does not change. From this, "state_checked is TRUE" is a trigger condition for the color changing animation effects of the IO symbol and the background track.

Correspondingly, when the state_checked of the switch control is TRUE, the switch control module provides the animation effect indications for the circular button and the IO symbol and the background track respectively, to enable the circular button and the IO symbol to perform the color changing animation effect of the IO symbol, and to enable the background track to perform the color changing animation effect.

The switch control module may provide adaptation interfaces respectively corresponding to different theme scenarios (such as a light theme, a dark theme, and an immersive theme) to show display effects corresponding to different theme scenarios respectively. In addition, depending on a current state of the switch control, a color gradient strategy is different. Therefore, the indication for the color changing animation effect may further include a color gradient strategy that matches a theme.

In an implementation, a state_enabled value of the switch control indicates a current state of the switch control. For example, when the state_enabled of the switch control is TRUE, a current state of the switch control is ON. In this case, the color gradient strategy is gradually changing from a color #256FFF (or a tone when a control is activated in an Android system) to a color #E5E5E5. Correspondingly, when the state_enabled of the switch control is FALSE, a current state of the switch control is OFF, and the color gradient strategy is gradually changing from a color #E5E5E5 to a color #256FFF (or a tone when a control is activated in an Android system).

In an optional implementation, the color changing animation effect may be replaced with a color and transparency changing animation effect. Correspondingly, the color gradient strategy may be replaced with a color and transparency gradient strategy including a color gradient scheme and a transparency gradient scheme. Details are not described herein again.

S312 and S313 are performed simultaneously.

S314: The circular button and the IO symbol perform enlarging animation effects.

For details that are not described in this process, refer to the foregoing embodiments. Details are not described herein again.

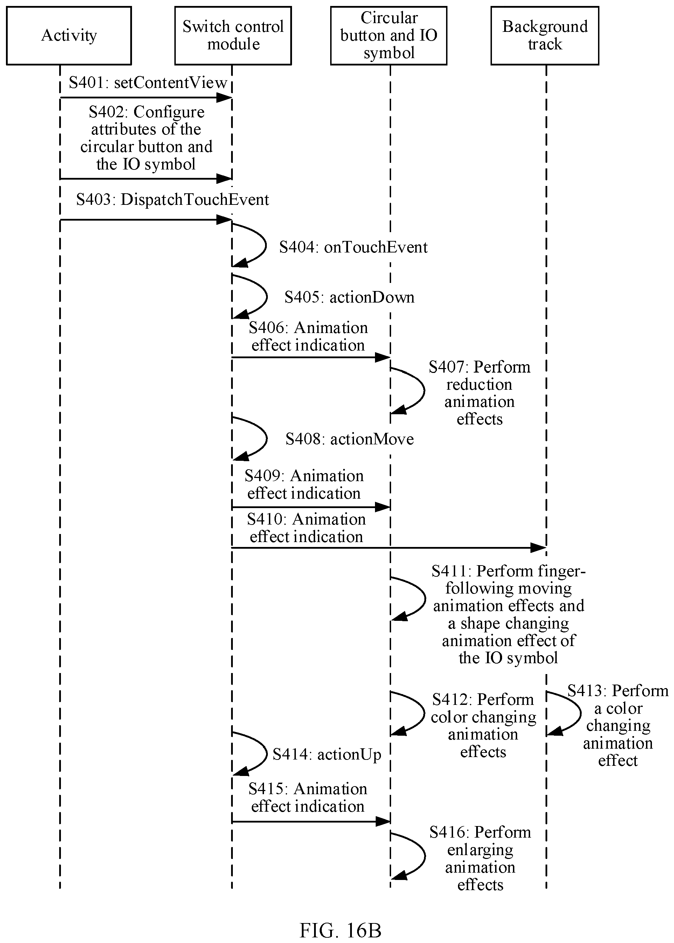

When the user controls a switch control by a touch and slide operation, for a time sequence of performing the animation effects in the switch control module, reference may be made to FIG. 16B. Refer to FIG. 16C. In the sequence diagram, a circular button, an IO symbol, and a background track are each an object in the switch control module, and each implements an animation effect based on a thread.

Refer to FIG. 16B. A process of a switch control display method provided in an embodiment of this application specifically includes:

S401: An Activity sets, by using setContentView, a switch control corresponding to a switch control module in an interface.

A setContentView() method is used for setting a user interface corresponding to the Activity. In this process, the setContentView() method is specifically used for setting an interface of the switch control.

S402: The Activity configures attributes of the circular button and the IO symbol.

The attributes of the circular button and the IO symbol indicate whether a current state of the switch control is ON or OFF. For example, the attributes of the circular button and the IO symbol may include a display position of the circular button and a display form of the IO symbol. For example, the attributes of the circular button and the IO symbol may further include display effects of the switch control, such as a color and transparency.

S403: In response to a user operation, the Activity performs DispatchTouchEvent.

The DispatchTouchEvent processes touch event distribution.

In this embodiment, when the user operates the switch control in the user interface corresponding to the Activity, the Activity distributes touch events to the switch control module.

S404: The switch control module performs onTouchEvent.

The switch control module performs an onTouchEvent() method to capture a user operation event, such as an event of a user finger pressing or touching a screen and an event of a user finger sliding the screen.

S405: The switch control module captures an actionDown event.

S406: The switch control module provides an animation effect indication for the circular button and the IO symbol.

When capturing the actionDown event, the switch control module indicates the circular button and the IO symbol to perform reduction animation effects.

S407: The circular button and the IO symbol perform the reduction animation effects.

The reduction animation effect may be implemented by redrawing.

When the finger presses or touches the switch control on the screen, the actionDown event is captured, and the redrawing of the circular button and the IO symbol is triggered. During the redrawing of the circular button and the IO symbol, bounds (bounds) of the circular button and the IO symbol are reduced to visually implement the reduction animation effects of the circular button and the IO symbol.

S408: The switch control module captures an actionMove event.

S409: The switch control module provides an animation effect indication for the circular button and the IO symbol.

When capturing the actionUp event, the switch control module indicates the circular button and the IO symbol to perform the IO symbol and perform moving animation effects, a shape changing animation effect of the IO symbol, and a color changing animation effect of the IO symbol.

Trigger conditions for the circular button and the IO symbol to perform the moving animation effects and the shape changing animation effect of the IO symbol are the actionMove event.

When the finger slides on the screen, the actionMove event is captured, and the redrawing of the circular button and the IO symbol is triggered. According to a position of a center point of the circular button in the background track, a rounded rectangle is drawn as the IO symbol. As a position of the circular button changes, bounds of the rounded rectangle are redrawn for a plurality of times, a width of the rounded rectangle gradually changes, and a shape of the IO symbol gradually changes from an "O" shape to an "I" shape, or gradually changes from an "I" shape to an "O" shape.

A trigger condition for the color changing animation effect of the IO symbol is that the circular button slides to a midpoint of the background track. For example, a variable mThumbPosition is used for representing the position of the circular button in the background track. When mThumbPosition=0.5, the circular button is located at the midpoint position of the background track. In other words, "mThumbPosition=0.5" is the trigger condition for the color changing animation effect of the IO symbol. Then the color changing animation effect of the IO symbol shows a finger-following gradient effect.

S410: The switch control module provides an animation effect indication for the background track.

A trigger condition for the background track to perform a color changing animation effect is that the circular button slides to the midpoint of the background track, or the state of the switch control changes (for example, switches from ON to OFF, or from OFF to ON).

A sequence of performing S409 and S410 is not limited in this embodiment.

S411: The circular button and the IO symbol perform finger-following moving animation effects and the shape changing animation effect of the IO symbol.

When the finger releases the switch control on the screen, the actionUp event is captured, and the redrawing of the circular button and the IO symbol is triggered. According to a position of a center point of the circular button in the background track, a rounded rectangle is drawn as the IO symbol. As a position of the circular button changes, bounds of the rounded rectangle are redrawn for a plurality of times, a width of the rounded rectangle gradually changes, and a shape of the IO symbol gradually changes from an "O" shape to an "I" shape, or gradually changes from an "I" shape to an "O" shape.

S412: The circular button and the IO symbol perform the color changing animation effect of the IO symbol.

S413: The background track performs the color changing animation effect.

In an implementation, a state _checked value of the switch control indicates whether the state of the switch control changes. For example, when the state_checked of the switch control is TRUE, the state of the switch control changes. When the state_checked of the switch control is FALSE, the state of the switch control does not change. From this, "state_checked is TRUE" is a trigger condition for the color changing animation effects of the IO symbol and the background track.

Correspondingly, when the state _checked of the switch control is TRUE, the switch control module provides the animation effect indications for the circular button and the IO symbol and the background track respectively, to enable the circular button and the IO symbol to perform the color changing animation effect of the IO symbol, and to enable the background track to perform the color changing animation effect.

The switch control module may provide adaptation interfaces respectively corresponding to different theme scenarios (such as a light theme, a dark theme, and an immersive theme) to show display effects corresponding to different theme scenarios respectively. In addition, depending on a current state of the switch control, a color gradient strategy is different. Therefore, the indication for the color changing animation effect may further include a color gradient strategy that matches a theme.

In an implementation, a state_enabled value of the switch control indicates a current state of the switch control. For example, when the state_enabled of the switch control is TRUE, a current state of the switch control is ON. In this case, the color gradient strategy is gradually changing from a color #256FFF (or a tone when a control is activated in an Android system) to a color #E5E5E5. Correspondingly, when the state_enabled of the switch control is FALSE, a current state of the switch control is OFF, and the color gradient strategy is gradually changing from a color #E5E5E5 to a color #256FFF (or a tone when a control is activated in an Android system).

In an optional implementation, the color changing animation effect may be replaced with a color and transparency changing animation effect. Correspondingly, the color gradient strategy may be replaced with a color and transparency gradient strategy including a color gradient scheme and a transparency gradient scheme. Details are not described herein again.

S312 and S313 are performed simultaneously.

S414: The switch control module captures an actionUp event.

S415: The switch control module provides an animation effect indication for the circular button and the IO symbol.

When capturing the actionUp event, the switch control module indicates the circular button and the IO symbol to perform enlarging animation effects.

S416: The circular button and the IO symbol perform the enlarging animation effects.

The enlarging animation effect may be implemented by redrawing.

When the finger presses or touches the switch control on the screen, the actionUp event is captured, and the redrawing of the circular button and the IO symbol is triggered. During the redrawing the circular button and the IO symbol, bounds (bounds) of the circular button and the IO symbol are enlarged to visually implement the enlarging animation effects of the circular button and the IO symbol.

For details that are not described in this process, refer to the foregoing embodiments. Details are not described herein again.

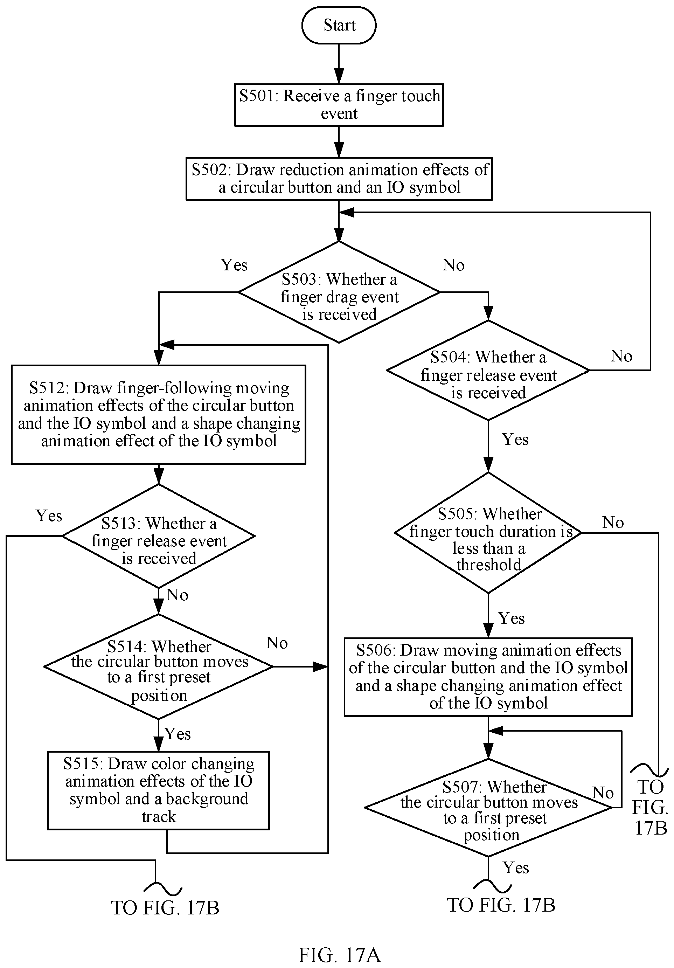

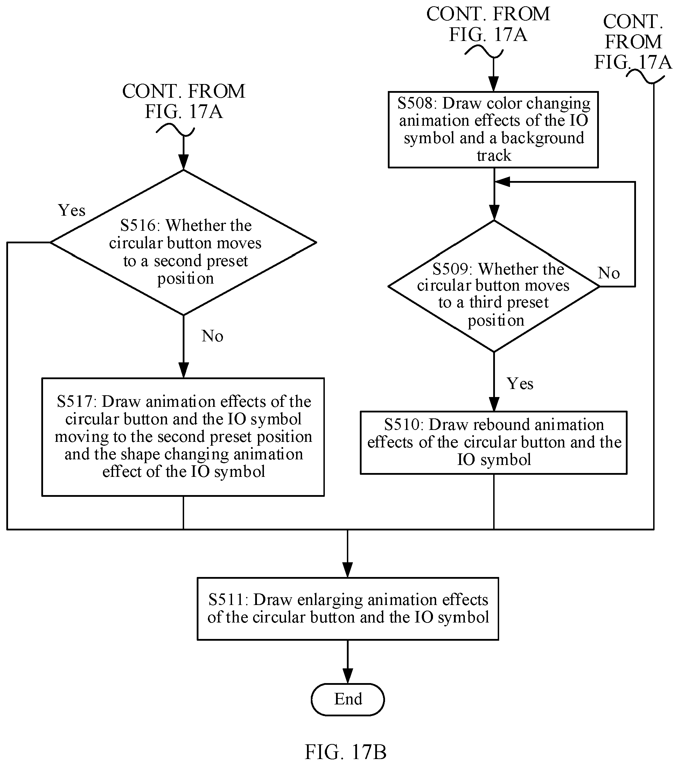

Refer to FIG. 17A and FIG. 17B. In a switch control display method provided in an embodiment of this application, a processing process of a switch control module specifically includes:

S501: The switch control module receives a finger touch event.

The switch control module performs an onTouchEvent() method to capture a user operation event.

If the switch control module captures the finger touch event performed by a user on the switch control, the following processing process is performed.

S502: The switch control module draws reduction animation effects of a circular button and an IO symbol.

The reduction animation effects of the circular button and the IO symbol may be implemented by redrawing bouns of the circular button and the IO symbol.

S503: The switch control module determines whether a finger drag event is received. If the finger drag event is not received, S504 is performed. If the finger drag event is received, S512 is performed.

S504: The switch control module determines whether a finger release event is received. If the finger release event is not received, S503 is performed. If the finger release event is received, S505 is performed.

S505: The switch control module determines whether finger press or touch duration is less than a threshold. If the finger pressing or touch duration is less than the threshold, S506 is performed. If the finger press or touch duration is greater than the threshold, S511 is performed.

If the finger touch duration is less than the threshold, it may be understood that a user touch operation is a tap operation, and the following process in which the tap operation triggers state switching of the switch control is proceeded. If the finger touch duration is not less than the threshold, it may be understood that a user touch operation is a long press operation. In this case, a state switching process of the switch control is not triggered, enlarging animation effects of the circular button and the IO symbol are directly drawn, and the process ends.

S506: The switch control module draws moving animation effects of the circular button and the IO symbol and a shape changing animation effect of the IO symbol.

S507: The switch control module determines whether the circular button moves to a first preset position. If the circular button moves to the first preset position, S508 is performed. If the circular button does not move to the first preset position, S507 is performed.

The first preset position refers to a middle position of a background track.

S508: The switch control module draws color changing animation effects of the IO symbol and the background track.

When the circular button slides to the middle position of the background track, the color changing animation effects of the IO symbol and the background track are triggered.

S508 may be adjusted to: The switch control module draws color and transparency changing animation effects the IO symbol and the background track.

S509: The switch control module determines whether the circular button moves to a third preset position. If the circular button moves to the third preset position, S510 is performed. If the circular button does not move to the third preset position, S509 is performed.

The third preset position may be understood as a left boundary or a right boundary of the background track.

It should be noted that before the switch control module determines whether the circular button moves to the third preset position, it is needed to first obtain whether an initial state of the switch control is ON or OFF, and determine, based on the initial state of the switch control, whether the circular button moves to the third preset position.

When the initial state of the switch control is ON, the switch control module determines whether the circular button moves to the right boundary of the background track. When the initial state of the switch control is OFF, the switch control module determines whether the circular button moves to the left boundary of the background track.

S510: The switch control module draws rebound animation effects of the circular button and the IO symbol.

S511: The switch control module draws the enlarging animation effects of the circular button and the IO symbol.

At this point, the process in which the tap operation triggers the state switching of the switch control ends.

A sequence of S510 and S511 is not limited in this embodiment.

S512: The switch control module draws finger-following moving animation effects of the circular button and the IO symbol and a shape changing animation effect of the IO symbol.

S513: The switch control module determines whether a finger release event is received. If the finger release event is received, S516 is performed. If the finger release event is not received, S514 is performed.

S514: The switch control module determines whether the circular button moves to a first preset position. If the circular button moves to the first preset position, S515 is performed. If the circular button does not move to the first preset position, S512 is performed.

The first preset position refers to a middle position of a background track.

S515: The switch control module draws color changing animation effects of the IO symbol and the background track, and returns to S512.

When the circular button slides to the middle position of the background track, the color changing animation effects of the IO symbol and the background track are triggered. Then the color changing animation effects of the IO symbol and the background track show a finger-following state.

S516: The switch control module determines whether the circular button moves to a second preset position. If the circular button moves to the second preset position, S511 is performed. If the circular button does not move to the second preset position, S517 is performed.

The second preset position refers to a left end or a right end of a sliding area of the background track.

S517: The switch control module draws animation effects of the circular button and the IO symbol moving to the second preset position and the shape changing animation effect of the IO symbol, and S511 is performed.

The second preset position in S517 is consistent with the second preset position in S516.

In a case that the circular button does not move to the left end or the right end of the sliding area of the background track, the switch control module needs to determine whether to move the circular button to the left end of the sliding area of the background track or to the right end of the sliding area of the background track.

In an optional implementation, the switch control module first obtains a current position of the circular button in the switch control, and then determines, based on the current position, whether to move the circular button to the left end of the sliding area of the background track or to the right end of the sliding area of the background track.

If the current position of the circular button in the switch control is between the left end of the sliding area and a midpoint of the sliding area, the switch control module draws animation effects of the circular button and the IO symbol moving to the left end of the sliding area of the background track and the shape changing animation effect of the IO symbol.

If the current position of the circular button in the switch control is between the right end of the sliding area and a midpoint of the sliding area, the switch control module draws animation effects of the circular button and the IO symbol moving to the right end of the sliding area of the background track and the shape changing animation effect of the IO symbol.

In another optional implementation, the switch control module first obtains whether an initial state of the switch control is ON or OFF, and then determines, based on the initial state of the switch control, whether to move the circular button to the left end of the sliding area of the background track or to the right end of the sliding area of the background track.

When the initial state of the switch control is ON, the switch control module draws animation effects of the circular button and the IO symbol moving to the left end of the sliding area of the background track and the shape changing animation effect of the IO symbol. When the initial state of the switch control is OFF, the switch control module draws animation effects of the circular button and the IO symbol moving to the right end of the sliding area of the background track and the shape changing animation effect of the IO symbol.

If the circular button does not slide to the left end or the right end of the sliding area of the background track when the user releases the switch control, the switch control module draws the animation effects of the circular button and the IO symbol moving to the second preset position and the shape changing animation effect of the IO symbol until the circular button slides to the left end or the right end of the sliding area of the background track. Then the switch control module draws the enlarging animation effects of the circular button and the IO symbol. At this point, a process in which a press or touch and slide operation triggers the state switching of the switch control ends.

S517 may alternatively be adjusted to: The switch control module draws animation effects of the circular button and the IO symbol moving and rebounding to the second preset position and the shape changing animation effect of the IO symbol, and S511 is performed.

For details that are not described in this process, refer to the foregoing embodiments. Details are not described herein again.

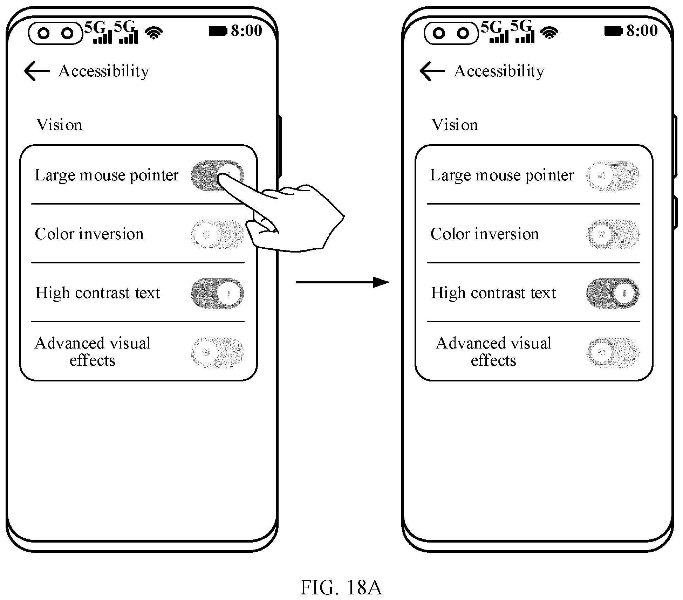

FIG. 18A is an example schematic diagram of an application scenario. As shown in FIG. 18A, a display state of a switch control of a function "large mouse pointer" is ON. When a user taps the switch control of the function "large mouse pointer", the display state of the switch control of the function "large mouse pointer" switches to OFF. For an animation effect of a tap operation triggering state switching of the switch control, refer to the foregoing description. Details are not

## EP 4 390 668 B1

described herein again.

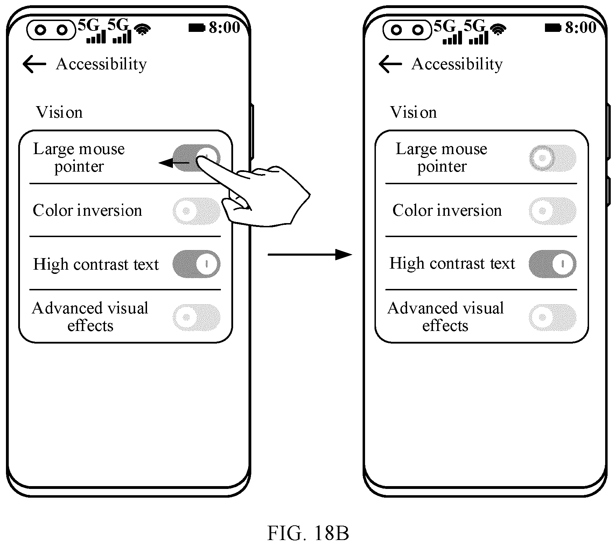

FIG. 18B is an example schematic diagram of an application scenario. As shown in FIG. 18B, a display state of a switch control of a function "large mouse pointer" is ON. When a user presses and slides the switch control of the function "large mouse pointer" or touches and slides the switch control of the function "large mouse pointer", the display state of the switch control of the function "large mouse pointer" switches to OFF. For an animation effect of a press and slide operation or a touch and slide operation triggering state switching of the switch control, refer to the foregoing description. Details are not described herein again.

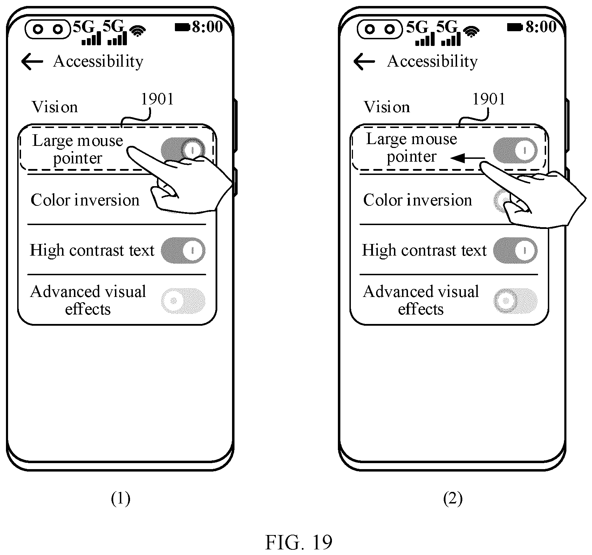

FIG. 19 is an example schematic diagram of an application scenario. In this application scenario, a hot zone of a switch control is larger than a display area of the switch control, and the hot zone includes a text description area corresponding to the switch control. As shown in section (1) of FIG. 19, the hot zone of the switch control is shown as an area 1901. The area includes the text description area corresponding to the switch control. In this case, a user performs a tap operation on a text area "large mouse pointer" corresponding to the switch control, state switching of the switch control of a function "large mouse pointer" can be triggered. As shown in section (2) of FIG. 19, the hot zone of the switch control is shown as an area 1901. The area includes the text description area corresponding to the switch control. In this case, a user performs a press and slide operation or a touch and slide operation on a text area "large mouse pointer" corresponding to the switch control, state switching of the switch control of a function "large mouse pointer" can be triggered. For an animation effect of the state switching of the switch control, refer to the foregoing description. Details are not described herein again.

An embodiment further provides a computer storage medium. The computer storage medium has computer instructions stored thereon. When the computer instructions are run on an electronic device, the electronic device is enabled to perform the foregoing relevant method steps to implement the switch control display method in the foregoing embodiments.

An embodiment further provides a computer program product. When the computer program product runs on a computer, the computer is enabled to perform the foregoing relevant method steps to implement the switch control display method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the switch control display method in the foregoing method embodiments.

The electronic device (such as a mobile phone), the computer storage medium, the computer program product, or the chip provided in embodiments of this application is configured to perform the corresponding method provided above. Therefore, for beneficial effects that can be achieved by the electronic device, the computer storage medium, the computer program product, or the chip, refer to beneficial effects of the corresponding method provided above. Details are not described herein again.

Based on the foregoing descriptions of the implementations, a person skilled in the art may clearly understand that for the purpose of convenient and brief description, division of the foregoing function modules is used as an example for illustration. In actual application, the foregoing functions can be allocated to different function modules and implemented according to a requirement, that is, an inner structure of an apparatus is divided into different function modules to implement all or some of the functions described above.

In the several embodiments provided in this application, it should be understood that the disclosed apparatus and method may be implemented in other manners. For example, the described apparatus embodiment is merely an example. For example, the module or the unit division is merely a logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

## Claims

1. A switch control display method, applied to an electronic device (100), wherein a switch control (20) operable by a user is displayed on a terminal interface of the electronic device (100), the switch control (20) provides the user with a choice between mutually exclusive options of an ON state and an OFF state for a certain function of the electronic device (100) and comprises a track (201) and a first icon (202), the first icon (202) slides in the track (201) in response to a slide operation of the user, and a second icon (203) is displayed on the first icon (202);

28

when the first icon (202) is located at a first position in the track (201), the certain function is in the ON state or the OFF state, and a shape of the second icon (203) is a first shape indicating the ON state or the OFF state; and when the first icon (202) is located at a second position in the track (201), the certain function is in the OFF state or the ON state, and the shape of the second icon (203) is a second shape indicating the OFF state or the ON state; and

the method comprises:

in a process that the first icon (202) slides in the track (201) in response to the slide operation of the user, enabling a linear change in the shape of the second icon (203) from the first shape to the second shape or from the second shape to the first shape with a sliding offset of the first icon (202).

2. The method according to claim 1, wherein

when the first icon (202) is located at the first position, colors of the track (201) and the second icon (202) are a first color; and

when the first icon (202) is located at the second position, the colors of the track (201) and the second icon (203) are a second color; and

the method further comprises:

when the first icon (202) slides from a third position to the first position, enabling the colors of the track (201) and the second icon (203) to gradually change from the second color to the first color; and

when the first icon (202) slides from the third position to the second position, enabling the colors of the track (201) and the second icon (203) to gradually change from the first color to the second color, wherein the third position is a midpoint position between the first position and the second position.

3. The method according to claim 1, wherein a height of the first shape is equal to a height of the second shape; and that in the process that the first icon (202) slides in the track (201) in response to the slide operation of the user, the enabling the linear change in the shape of the second icon (203) from the first shape to the second shape or from the second shape to the first shape with the sliding offset of the first icon (202) comprises:

in the process that the first icon (202) slides in the track (201) in response to the slide operation of the user, enabling a width of the second icon to change linearly with the sliding offset of the first icon (202).

4. The method according to claim 3, wherein when the certain function is in the OFF state, the second icon (203) is circular; and when the certain function is in the ON state, the second icon (203) is rounded rectangular.

5. The method according to any one of claims 1 to 4, wherein the method further comprises:

in response to a tap operation of the user on the switch control (20), enabling the first icon (202) to slide from the first position to the second position, or enabling the first icon (202) to slide from the second position to the first position.

6. The method according to claim 5, wherein that in response to the tap operation of the user on the switch control (20), the enabling the first icon (202) to slide from the first position to the second position, or enabling the first icon (202) to slide from the second position to the first position comprises:

in response to the touch operation of the user on the switch control (20), reducing sizes of the first icon (202) and the second icon (203); and

in response to cancellation of the touch operation, enabling the first icon (202) to slide from the first position to the second position, or enabling the first icon (202) to slide from the second position to the first position, and enlarges and restores the sizes of the first icon (202) and the second icon (203).

7. The method according to claim 5, wherein the enabling the first icon (202) to slide from the first position to the second position comprises:

after the first icon (202) slides from the first position to a boundary of the track (201) along a first direction, enabling the first icon (202) to slide to the second position along a second direction; and

the enabling the first icon (202) to slide from the second position to the first position comprises:

after the first icon (202) slides from the second position to the boundary of the track (201) along the second direction, enabling the first icon (202) to slide to the first position along the first direction, wherein the first direction is a direction from the first position to the second position, and the second direction is a direction from the second position to the first position.

8. The method according to claim 5, wherein that in response to the tap operation of the user on the switch control (20), the enabling the first icon (202) to slide from the first position to the second position, or enabling the first icon (202) to slide from the second position to the first position comprises:

in response to a tap operation on a hot zone of the switch control (20), enabling the first icon (202) to slide from the first position to the second position, or enabling the first icon (202) to slide from the second position to the first position, wherein

a size of the hot zone of the switch control (20) is larger than a size of the switch control (20), and a hot zone area of the switch control (20) comprises or partially comprises a text description area corresponding to the switch control (20).

9. The method according to any one of claims 1 to 4, wherein the method further comprises:

in response to stop of the slide operation, enabling the first icon (202) to stop sliding; and

in response to cancellation of the slide operation, enabling the first icon (202) to move to the first position or the second position.

10. The method according to claim 9, wherein

that in response to cancellation of the slide operation, the enabling the first icon (202) to move to the first position or the second position comprises:

in response to the cancellation of the slide operation, enabling the first icon (202) to move to the first position or the second position, and enlarging and restoring the sizes of the first icon (202) and the second icon (203).

11. The method according to claim 9, wherein that in response to the cancellation of the slide operation, the enabling the first icon (202) to move to the first position or the second position comprises:

in response to the cancellation of the slide operation, obtaining a current position of the first icon (202) in the track (201);

when the current position is the first position or the second position, enabling the first icon (202) to stop sliding;

when the current position is between the first position and the third position, enabling the first icon (202) to move from the current position to the first position; and

when the current position is between the second position and the third position, enabling the first icon (202) to move from the current position to the second position, wherein the third position is the midpoint position between the first position and the second position.

12. The method according to claim 11, wherein the enabling the first icon (202) to move from the current position to the first position comprises:

after the first icon (202) slides from the current position to a boundary of the track (201) along a second direction, enabling the first icon (202) to slide to the first position along a first direction; and

the enabling the first icon (202) to move from the current position to the second position comprises:

after the first icon (202) slides from the current position to the boundary of the track (201) along the first direction, enabling the first icon (202) to slide to the second position along the second direction, wherein the first direction is a direction from the first position to the second position, and the second direction is a direction from the second position to the first position.

13. The method according to claim 9, wherein the slide operation of the user is performed on a hot zone of the switch control (20), and

a size of the hot zone of the switch control (20) is larger than a size of the switch control (20), and a hot zone area of the switch control (20) comprises or partially comprises a text description area corresponding to the switch control (20).

14. An electronic device (100), comprising:

one or more processors (110);
a memory (121); and

one or more computer programs, wherein the one or more computer programs are stored in the memory (121), and when the computer program is executed by the one or more processors (110), the computer program causes the one or more processors to execute the switch control (20) display method according to any one of claims 1 to 13.

15. A computer-readable storage medium, comprising a computer program, wherein when the computer program is run on an electronic device (100), the computer program causes one or more processors of the electronic device (100) to execute the switch control (20) display method according to any one of claims 1 to 13.

**Patentansprüche**

1. Ein Verfahren zur Anzeige einer Schaltersteuerung, angewandt auf ein elektronisches Gerät (100), wobei eine vom Benutzer bedienbare Schaltersteuerung (20) auf einer Terminaloberfläche des elektronischen Geräts (100) dargestellt wird, die Schaltersteuerung (20) dem Benutzer eine Auswahl zwischen sich gegenseitig ausschließenden Optionen eines EIN-Zustands und eines AUS-Zustands für eine bestimmte Funktion des elektronischen Geräts (100) bietet und eine Schiene (201) sowie ein erstes Symbol (202) umfasst, wobei das erste Symbol (202) als Reaktion auf eine Schiebeoperation des Benutzers in der Schiene (201) verschoben wird und ein zweites Symbol (203) auf dem ersten Symbol (202) angezeigt wird;

wenn sich das erste Symbol (202) an einer ersten Position in der Schiene (201) befindet, befindet sich die bestimmte Funktion im EIN-Zustand oder AUS-Zustand, und die Form des zweiten Symbols (203) ist eine erste Form, die den EIN- oder AUS-Zustand anzeigt; und
wenn sich das erste Symbol (202) an einer zweiten Position in der Schiene (201) befindet, befindet sich die bestimmte Funktion im AUS-Zustand oder EIN-Zustand, und die Form des zweiten Symbols (203) ist eine zweite Form, die den AUS- oder EIN-Zustand anzeigt; und
das Verfahren umfasst:
wenn das erste Symbol (202) während des Verschiebens in der Schiene (201) als Reaktion auf die Schiebeoperation des Benutzers bewegt wird, wird eine lineare Änderung der Form des zweiten Symbols (203) von der ersten Form zur zweiten Form oder von der zweiten Form zur ersten Form in Abhängigkeit von der Verschiebung des ersten Symbols (202) ermöglicht.

2. Verfahren gemäß Anspruch 1, wobei

sich das erste Symbol (202) an der ersten Position befindet, sind die Farben der Schiene (201) und des zweiten Symbols (202) eine erste Farbe; und
sich das erste Symbol (202) an der zweiten Position befindet, sind die Farben der Schiene (201) und des zweiten Symbols (203) eine zweite Farbe; und
das Verfahren umfasst ferner:

wenn das erste Symbol (202) von einer dritten Position zur ersten Position gleitet, werden die Farben der Schiene (201) und des zweiten Symbols (203) allmählich von der zweiten Farbe zur ersten Farbe geändert; und
wenn das erste Symbol (202) von der dritten Position zur zweiten Position gleitet, werden die Farben der Schiene (201) und des zweiten Symbols (203) allmählich von der ersten Farbe zur zweiten Farbe geändert, wobei
die dritte Position eine Mittelposition zwischen der ersten und der zweiten Position ist.

3. Verfahren gemäß Anspruch 1, wobei eine Höhe der ersten Form gleich der Höhe der zweiten Form ist; und
dass während des Vorgangs, bei dem das erste Symbol (202) auf der Spur (201) als Reaktion auf die Schiebebewegung des Benutzers gleitet, die lineare Änderung der Form des zweiten Symbols (203) von der ersten Form zur zweiten Form oder von der zweiten Form zur ersten Form mit dem Verschiebungsversatz des ersten Symbols (202) ermöglicht wird:
während des Vorgangs, bei dem das erste Symbol (202) auf der Spur (201) als Reaktion auf die Schiebebewegung des Benutzers gleitet, wird eine Änderung der Breite des zweiten Symbols ermöglicht, die sich linear mit dem Verschiebungsversatz des ersten Symbols (202) ändert.

4. Verfahren gemäß Anspruch 3, wobei das zweite Symbol (203) kreisförmig ist, wenn die bestimmte Funktion ausgeschaltet ist; und das zweite Symbol (203) abgerundet rechteckig ist, wenn die bestimmte Funktion eingeschaltet ist.

5. Verfahren nach einem der Ansprüche 1 bis 4, wobei das Verfahren ferner Folgendes umfasst:
als Reaktion auf eine Tippoperation des Benutzers auf die Schaltsteuerung (20), das erste Symbol (202) vom ersten zum zweiten Punkt gleiten zu lassen oder das erste Symbol (202) vom zweiten zum ersten Punkt gleiten zu lassen.

6. Verfahren gemäß Anspruch 5, wobei auf die Tippoperation des Benutzers auf die Schaltsteuerung (20) das erste Symbol (202) vom ersten zum zweiten Punkt gleitet oder das erste Symbol (202) vom zweiten zum ersten Punkt gleitet und umfasst dabei:

als Reaktion auf die Berührungsoperation des Benutzers auf die Schaltsteuerung (20), werden die Größen des ersten Symbols (202) und des zweiten Symbols (203) verkleinert; und
als Reaktion auf die Aufhebung der Berührungsoperation wird ermöglicht, dass das erste Symbol (202) vom ersten zum zweiten Punkt oder vom zweiten zum ersten Punkt gleitet, und die Größen des ersten Symbols (202) und des zweiten Symbols (203) werden vergrößert und wiederhergestellt.

7. Verfahren gemäß Anspruch 5, wobei das Ermöglichen, dass das erste Symbol (202) vom ersten zum zweiten Punkt gleitet, umfasst:

nachdem das erste Symbol (202) vom ersten Punkt zur Begrenzung der Spur (201) in der ersten Richtung gleitet, wird ermöglicht, dass das erste Symbol (202) in der zweiten Richtung zum zweiten Punkt gleitet; und
das Ermöglichen, dass das erste Symbol (202) vom zweiten zum ersten Punkt gleitet, umfasst:

nachdem das erste Symbol (202) vom zweiten Punkt zur Begrenzung der Spur (201) in der zweiten Richtung gleitet, wird ermöglicht, dass das erste Symbol (202) in der ersten Richtung zum ersten Punkt gleitet, wobei Die erste Richtung ist eine Richtung von der ersten Position zur zweiten Position, und die zweite Richtung ist eine Richtung von der zweiten Position zur ersten Position.

8. Verfahren nach Anspruch 5, wobei in Reaktion auf die Tippoperation des Benutzers auf das Schaltsteuerungselement (20) das erste Symbol (202) von der ersten Position zur zweiten Position verschoben wird, oder das erste Symbol (202) von der zweiten Position zur ersten Position verschoben wird, umfasst:

als Reaktion auf einen Tippvorgang in einer Hotzone der Schaltsteuerung (20) wird das erste Symbol (202) von der ersten Position zur zweiten Position verschoben oder das erste Symbol (202) von der zweiten Position zur ersten Position verschoben, wobei
Die Größe der Hotzone der Schaltsteuerung (20) ist größer als die Größe der Schaltsteuerung (20), und der Hotzonenbereich der Schaltsteuerung (20) umfasst ganz oder teilweise einen Textbeschreibungsbereich, der der Schaltsteuerung (20) entspricht.

9. Verfahren nach einem der Ansprüche 1 bis 4, wobei das Verfahren ferner umfasst:

als Reaktion auf das Beenden der Verschiebeoperation wird das erste Symbol (202) am Verschieben gehindert; und
als Reaktion auf die Abbruchoperation der Verschiebeoperation wird das erste Symbol (202) entweder zur ersten Position oder zur zweiten Position versetzt.

10. Verfahren nach Anspruch 9, wobei
dass als Reaktion auf die Abbruchoperation der Verschiebeoperation das Versetzen des ersten Symbols (202) zur ersten Position oder zur zweiten Position umfasst:
als Reaktion auf die Abbruchoperation der Verschiebeoperation wird das erste Symbol (202) entweder zur ersten oder zur zweiten Position versetzt und die Größen des ersten Symbols (202) und des zweiten Symbols (203) werden vergrößert und wiederhergestellt.

11. Verfahren nach Anspruch 9, wobei als Reaktion auf die Abbruchoperation der Verschiebeoperation das Versetzen des ersten Symbols (202) zur ersten Position oder zur zweiten Position umfasst:

als Reaktion auf die Abbruchoperation der Verschiebeoperation wird die aktuelle Position des ersten Symbols (202) auf der Spur (201) ermittelt;

wenn die aktuelle Position die erste Position oder die zweite Position ist, wird das erste Symbol (202) am Verschieben gehindert;

wenn die aktuelle Position zwischen der ersten Position und der dritten Position liegt, wird das erste Symbol (202) von der aktuellen Position zur ersten Position versetzt; und

Wenn sich die aktuelle Position zwischen der zweiten und der dritten Position befindet, wird das erste Symbol (202) aktiviert, um sich von der aktuellen Position zur zweiten Position zu bewegen, wobei die dritte Position die Mittelposition zwischen der ersten und der zweiten Position ist.

12. Das Verfahren gemäß Anspruch 11, wobei das Aktivieren des ersten Symbols (202), das sich von der aktuellen Position zur ersten Position bewegt, Folgendes umfasst:

Nachdem das erste Symbol (202) von der aktuellen Position entlang einer zweiten Richtung zum Rand der Spur (201) gleitet, wird das erste Symbol (202) aktiviert, um entlang einer ersten Richtung zur ersten Position zu gleiten; und

das Aktivieren des ersten Symbols (202), um sich von der aktuellen Position zur zweiten Position zu bewegen, umfasst:

Nachdem das erste Symbol (202) von der aktuellen Position entlang der ersten Richtung zum Rand der Spur (201) gleitet, wird das erste Symbol (202) aktiviert, um entlang der zweiten Richtung zur zweiten Position zu gleiten, wobei

die erste Richtung eine Richtung von der ersten zur zweiten Position ist und die zweite Richtung eine Richtung von der zweiten zur ersten Position ist.

13. Das Verfahren gemäß Anspruch 9, wobei die Wischbewegung des Benutzers auf einer Hotzone des Schaltsteuerelements (20) ausgeführt wird, und

die Größe der Hotzone des Schaltsteuerelements (20) größer ist als die Größe des Schaltsteuerelements (20), und ein Hotzonenbereich des Schaltsteuerelements (20) umfasst oder umfasst teilweise einen der Schaltsteuerelement (20) entsprechenden Bereich der Textbeschreibung.

14. Elektronisches Gerät (100), umfassend:

einen oder mehrere Prozessoren (110);

einen Speicher (121); und

ein oder mehrere Computerprogramme, wobei die ein oder mehrere Computerprogramme im Speicher (121) gespeichert sind und, wenn das Computerprogramm von dem einen oder mehreren Prozessoren (110) ausgeführt wird, das Computerprogramm dazu führt, dass der oder die Prozessoren das Anzeigeverfahren für das Schaltsteuerelement (20) gemäß einem der Ansprüche 1 bis 13 ausführen.

15. Ein computerlesbares Speichermedium, umfassend ein Computerprogramm, wobei das Computerprogramm, wenn es auf einem elektronischen Gerät (100) ausgeführt wird, dazu führt, dass einer oder mehrere Prozessoren des elektronischen Geräts (100) das Anzeigeverfahren für das Schaltsteuerelement (20) gemäß einem der Ansprüche 1 bis 13 ausführen.

## Revendications

1. Procédé d'affichage de commande de commutateur, appliqué à un dispositif électronique (100), dans lequel une commande de commutateur (20) actionnable par un utilisateur est affichée sur une interface terminale du dispositif électronique (100), la commande de commutateur (20) offrant à l'utilisateur un choix entre des options mutuellement exclusives d'un état MARCHE (ON) et d'un état ARRÊT (OFF) pour une fonction particulière du dispositif électronique (100) et comprenant une piste (201) et une première icône (202), la première icône (202) glissant dans la piste (201) en réponse à une opération de glissement de l'utilisateur, et une seconde icône (203) étant affichée sur la première icône (202) ;

lorsque la première icône (202) est située à une première position dans la piste (201), la fonction concernée est à l'état MARCHE ou ARRÊT, et la forme de la seconde icône (203) est une première forme indiquant l'état MARCHE ou ARRÊT ; et

lorsque la première icône (202) est située à une seconde position dans la piste (201), la fonction concernée est à l'état ARRÊT ou MARCHE, et la forme de la seconde icône (203) est une seconde forme indiquant l'état ARRÊT ou MARCHE ; et

le procédé comprend :

au cours du processus où la première icône (202) glisse dans la piste (201) en réponse à l'opération de glissement de l'utilisateur, permettre une modification linéaire de la forme de la seconde icône (203) de la première forme à la seconde forme ou de la seconde forme à la première forme, en fonction du déplacement de la première icône (202).

2. Procédé selon la revendication 1, dans lequel

lorsque la première icône (202) est située à la première position, les couleurs de la piste (201) et de la seconde icône (202) sont d'une première couleur ; et

lorsque la première icône (202) est située à la seconde position, les couleurs de la piste (201) et de la seconde icône (203) sont d'une seconde couleur ; et

le procédé comprend en outre :

lorsque la première icône (202) glisse d'une troisième position vers la première position, permettre que les couleurs de la piste (201) et de la seconde icône (203) changent progressivement de la seconde couleur à la première couleur ; et

lorsque la première icône (202) glisse de la troisième position vers la seconde position, permettre que les couleurs de la piste (201) et de la seconde icône (203) changent progressivement de la première couleur à la seconde couleur, où

la troisième position est une position médiane entre la première et la seconde position.

3. Procédé selon la revendication 1, dans lequel la hauteur de la première forme est égale à la hauteur de la seconde forme ; et

dans le processus où la première icône (202) glisse sur la piste (201) en réponse à l'opération de glissement de l'utilisateur, permettre le changement linéaire de la forme de la seconde icône (203) de la première forme vers la seconde forme ou de la seconde forme vers la première forme en fonction du décalage de glissement de la première icône (202) comprend :

dans le processus où la première icône (202) glisse sur la piste (201) en réponse à l'opération de glissement de l'utilisateur, permettre que la largeur de la seconde icône change linéairement en fonction du décalage de glissement de la première icône (202).

4. Méthode selon la revendication 3, où lorsque la fonction donnée est à l'état OFF, la seconde icône (203) est circulaire ; et lorsque la fonction donnée est à l'état ON, la seconde icône (203) est rectangulaire à bords arrondis.

5. Méthode selon l'une des revendications 1 à 4, où la méthode comprend en outre :

en réponse à une opération d'appui de l'utilisateur sur le contrôle de commutateur (20), permettre à la première icône (202) de glisser de la première position à la seconde position, ou permettre à la première icône (202) de glisser de la seconde position à la première position.

6. Méthode selon la revendication 5, où, en réponse à l'opération d'appui de l'utilisateur sur le contrôle de commutateur (20), permettre à la première icône (202) de glisser de la première position à la seconde position, ou permettre à la première icône (202) de glisser de la seconde position à la première position comprend :

en réponse à l'opération tactile de l'utilisateur sur le contrôle de commutateur (20), réduire les tailles de la première icône (202) et de la seconde icône (203) ; et

en réponse à l'annulation de l'opération tactile, permettre à la première icône (202) de glisser de la première position à la seconde position, ou permettre à la première icône (202) de glisser de la seconde position à la première position, et agrandir et restaurer les tailles de la première icône (202) et de la seconde icône (203).

7. Méthode selon la revendication 5, où permettre à la première icône (202) de glisser de la première position à la seconde position comprend :

après que la première icône (202) a glissé de la première position jusqu'à une limite de la piste (201) dans une première direction, permettre à la première icône (202) de glisser vers la seconde position dans une seconde direction ; et
permettre à la première icône (202) de glisser de la seconde position à la première position comprend :

> après que la première icône (202) a glissé de la seconde position jusqu'à la limite de la piste (201) dans la seconde direction, permettre à la première icône (202) de glisser vers la première position dans la première direction, où
> la première direction est une direction allant de la première position à la seconde position, et la seconde direction est une direction allant de la seconde position à la première position.

8. Procédé selon la revendication 5, dans lequel, en réponse à l'opération de tapotement de l'utilisateur sur le contrôle de commutation (20), le fait de permettre à la première icône (202) de glisser de la première position à la seconde position, ou de permettre à la première icône (202) de glisser de la seconde position à la première position comprend :

> en réponse à une opération de tapotement sur une zone sensible du contrôle de commutation (20), permettre à la première icône (202) de glisser de la première position à la seconde position, ou permettre à la première icône (202) de glisser de la seconde position à la première position, dans lequel
> la taille de la zone sensible du contrôle de commutation (20) est supérieure à la taille du contrôle de commutation (20), et la zone sensible du contrôle de commutation (20) comprend ou inclut partiellement une zone de description de texte correspondant au contrôle de commutation (20).

9. Procédé selon l'une quelconque des revendications 1 à 4, dans lequel le procédé comprend en outre :

> en réponse à l'arrêt de l'opération de glissement, permettre à la première icône (202) d'arrêter de glisser ; et
> en réponse à l'annulation de l'opération de glissement, permettre à la première icône (202) de se déplacer vers la première position ou la seconde position.

10. Procédé selon la revendication 9, dans lequel
en réponse à l'annulation de l'opération de glissement, le fait de permettre à la première icône (202) de se déplacer vers la première position ou la seconde position comprend :
en réponse à l'annulation de l'opération de glissement, permettre à la première icône (202) de se déplacer vers la première position ou la seconde position, ainsi qu'agrandir et restaurer les tailles de la première icône (202) et de la seconde icône (203).

11. Procédé selon la revendication 9, dans lequel, en réponse à l'annulation de l'opération de glissement, le fait de permettre à la première icône (202) de se déplacer vers la première position ou la seconde position comprend :

> en réponse à l'annulation de l'opération de glissement, obtenir une position actuelle de la première icône (202) sur la piste (201) ;
> lorsque la position actuelle est la première position ou la seconde position, permettre à la première icône (202) d'arrêter de glisser ;
> lorsque la position actuelle est entre la première position et la troisième position, permettre à la première icône (202) de se déplacer de la position actuelle vers la première position ; et
> lorsque la position actuelle se situe entre la deuxième position et la troisième position, permettant à la première icône (202) de se déplacer de la position actuelle vers la deuxième position, la troisième position étant la position médiane entre la première position et la deuxième position.

12. La méthode selon la revendication 11, dans laquelle le fait de permettre à la première icône (202) de se déplacer de la position actuelle vers la première position comprend :

> après que la première icône (202) ait glissé de la position actuelle vers une limite de la piste (201) selon une seconde direction, permettre à la première icône (202) de glisser vers la première position selon une première direction ; et
> le fait de permettre à la première icône (202) de se déplacer de la position actuelle vers la deuxième position comprend :

>> après que la première icône (202) ait glissé de la position actuelle jusqu'à la limite de la piste (201) selon la première direction, permettre à la première icône (202) de glisser vers la deuxième position selon la seconde direction, dans laquelle

la première direction est une direction allant de la première position à la deuxième position, et la seconde direction est une direction allant de la deuxième position à la première position.

13. La méthode selon la revendication 9, dans laquelle l'opération de glissement de l'utilisateur est effectuée sur une zone sensible de la commande de commutation (20), et
une taille de la zone sensible de la commande de commutation (20) est supérieure à la taille de la commande de commutation (20), et une zone sensible de la commande de commutation (20) comprend ou comprend partiellement une zone de description textuelle correspondant à la commande de commutation (20).

14. Un dispositif électronique (100) comprenant :

un ou plusieurs processeurs (110) ;
une mémoire (121) ; et
un ou plusieurs programmes informatiques, dans lesquels le ou les programmes informatiques sont stockés dans la mémoire (121), et lors de l'exécution du programme informatique par le ou les processeurs (110), le programme informatique amène le ou les processeurs à exécuter la méthode d'affichage de la commande de commutation (20) selon l'une des revendications 1 à 13.

15. Un support de stockage lisible par ordinateur, comprenant un programme informatique, dans lequel, lorsque le programme informatique est exécuté sur un dispositif électronique (100), le programme informatique amène un ou plusieurs processeurs du dispositif électronique (100) à exécuter la méthode d'affichage de la commande de commutation (20) selon l'une des revendications 1 à 13.

Electronic device 100

FIG. 1

| Application layer | Activity | Settings | Gallery | Calendar | Phone |
|---|---|---|---|---|---|
| | Map | Navigation | WLAN | Music | ... |

| Application framework layer | Activity manager | Content provider | Window manager | Notification manager |
|---|---|---|---|---|
| | View system | Resource manager | Switch control module | ... |

| System library | Surface manager | Three-dimensional graphics processing library | Android runtime |
|---|---|---|---|
| | Two-dimensional graphics engine | Media library | ... | |

| Kernel layer | Display driver | Sensor driver | Wi-Fi driver | ... |
|---|---|---|---|---|

FIG. 2

(1)                                          (2)

FIG. 3

Switch control
20

2021

201

202

203

(1)

Switch control
20

201

2021

202

203

(2)

FIG. 4

Sliding area

6 dp

18 dp

24 dp

3 dp 6 dp

3 dp

42 dp

FIG. 5A

Sliding area

6 dp

18 dp

1.5 dp  3 dp

FIG. 5B

Moment T0:

100%

Moment T7:

100%

Moment T1:

94%

Moment T6:

94%

Moment T2:

Moment T5:

Moment T3:

Moment T4:

FIG. 6A

Moment T0:

Moment T7:

100%  100%

Moment T1:

Moment T6:

94%  94%

Moment T2:

Moment T5:

Moment T3:

Moment T4:

FIG. 6B

FIG. 7A

FIG. 7B

(1)

(2)

(3)

FIG. 8

Press to trigger  Release to trigger

50 ms

200 ms

| Reduction animation effects of a circular button and an IO symbol | Moving animation effects of the circular button and the IO symbol, and shape changing animation effect of the IO symbol | Color changing animation effects of a background track and the IO symbol | Rebound animation effects of the circular button and the IO symbol | Enlarging animation effects of the circular button and the IO symbol |

FIG. 9

Moment T0:

Moment T7:

Moment T1:

Moment T6:

Moment T2:

Moment T5:

Moment T3:

Moment T4:

FIG. 10A

Moment T0:

Moment T7:

100%

100%

Moment T1:

Moment T6:

94%

94%

Moment T2:

Moment T5:

Moment T3:

Moment T4:

FIG. 10B

FIG. 10C

Moment T0:

Moment T7:

100% 100%

Moment T1:

Moment T6:

94% 94%

Moment T2:

Moment T5:

Moment T3:

Moment T4:

FIG. 10D

FIG. 10E

Moment T0:

Moment T0:

100%

100%

Moment T1:

Moment T1:

94%

94%

Moment T2:

Moment T2:

100%

100%

(1)

(2)

FIG. 11

(1)

(2)

(3)

(4)

FIG. 12

| Application layer | Application |
|---|---|

Adapt to

| Application framework layer | arr packet switch control | Inherit from | System control SwitchEx |
|---|---|---|---|

| Reduction/ Enlarging animation effects of a circular button and an IO symbol | Moving animation effects and rebound animation effects of the circular button and the IO symbol, and shape changing animation effect of the IO symbol | Color changing animation effects of a background track and the IO symbol | Finger-following moving animation effects of the circular button and the IO symbol |
|---|---|---|---|

FIG. 13

Available state-switch on

Available state-switch off

Unavailable state-switch on

Unavailable state-switch off

FIG. 14

Light theme

(1)

Dark theme

(2)

Immersive theme

(3)

FIG. 15

FIG. 16A

| Activity | Switch control module | Circular button and IO symbol | Background track |
|---|---|---|---|

S401: setContentView

S402: Configure attributes of the circular button and the IO symbol

S403: DispatchTouchEvent

S404: onTouchEvent

S405: actionDown

S406: Animation effect indication

S407: Perform reduction animation effects

S408: actionMove

S409: Animation effect indication

S410: Animation effect indication

S411: Perform finger-following moving animation effects and a shape changing animation effect of the IO symbol

S412: Perform color changing animation effects

S413: Perform a color changing animation effect

S414: actionUp

S415: Animation effect indication

S416: Perform enlarging animation effects

FIG. 16B

Switch control module

| Circular button and IO symbol | Background track |

FIG. 16C

Start

S501: Receive a finger touch event

S502: Draw reduction animation effects of a circular button and an IO symbol

S503: Whether a finger drag event is received

Yes ← | → No

S504: Whether a finger release event is received → No

S512: Draw finger-following moving animation effects of the circular button and the IO symbol and a shape changing animation effect of the IO symbol

Yes (S504) ↓

S513: Whether a finger release event is received

S505: Whether finger touch duration is less than a threshold → No

Yes ← (S513) | No ↓

S514: Whether the circular button moves to a first preset position → No

Yes ↓

S506: Draw moving animation effects of the circular button and the IO symbol and a shape changing animation effect of the IO symbol

S515: Draw color changing animation effects of the IO symbol and a background track

S507: Whether the circular button moves to a first preset position → No → TO FIG. 17B

Yes ↓

TO FIG. 17B

TO FIG. 17B

FIG. 17A

FIG. 17B

FIG. 18A

FIG. 18B

FIG. 19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210652634X

- US 10425575 B2

**Non-patent literature cited in the description**

- *Creating day-night CSS only toggle switch*, 29 December 2020, https://daily-dev-tips.com/posts/creating-day-night-css-only-toggle-switch